# EUROPÄISCHE PATENTANMELDUNG

(11) **EP 4 825 689 A1**
(43) Veröffentlichungstag der Anmeldung: **21.10.2026**
(21) Anmeldenummer: 26171483.6
(22) Anmeldetag: 09.04.2026
(51) Int. Cl.: B60W 30/182, B60W 40/064, B60W 40/068, B60W 50/00

(54) **VERFAHREN UND VORRICHTUNG ZUR FAHRWERK-DOMÄNENSTEUERUNG EINES FAHRZEUGS SOWIE GERÄT UND SPEICHERMEDIUM**

(30) Priorität: 17.04.2025 CN 202510487978
(71) Anmelder: ZF Friedrichshafen AG, 88046 Friedrichshafen (DE)
(72) Erfinder: Luo, Zheng, 88046 Friedrichshafen (DE); Wang, Xiandong, 88046 Friedrichshafen (DE)
(74) Vertreter: ZF Friedrichshafen AG

(57) **Zusammenfassung**

Die Ausführungsbeispiele der vorliegenden Anmeldung stellen ein Verfahren und eine Vorrichtung zur Fahrwerk-Domänensteuerung eines Fahrzeugs sowie ein Gerät und ein Speichermedium bereit. Das Verfahren umfasst: Erfassen von Straßeninformationen an einer Zielposition in einer vorgegebenen Navigationsroute und von einer Fahrabsicht zum Anfahren an die Zielposition; Bestimmen von Ausgabeparametern einer Zielsteuerfunktion in einem Fahrwerk-Domänencontroller gemäß den Straßeninformationen und der Fahrabsicht, und Bestimmen von Aktuationsparametern eines Fahrwerk-Domänen-Aktuationssystems des Fahrzeugs gemäß den Ausgabeparametern; und Steuern des Aktuationssystems mit den Aktuationsparametern, sodass das Fahrzeug bis zu der Zielposition fährt. Das Verfahren zielt darauf ab, die Performance des Fahrzeugs zu verbessern.

## Beschreibung

### Technisches Gebiet

Die vorliegende Anmeldung betrifft das Gebiet der intelligenten Fahrtechnologien, insbesondere ein Verfahren und eine Vorrichtung zur Fahrwerk-Domänensteuerung eines Fahrzeugs sowie ein Gerät und ein Speichermedium.

### Stand der Technik

Die Fahrwerksdomäne eines Fahrzeugs umfasst eine Vielzahl von Aktuationssystemen, wie z. B. ein Lenksystem, ein Federungssystem und ein Bremssystem. Ein Fahrwerk-Domänencontroller realisiert die Steuerung des Fahrzeugs durch Steuern der einzelnen Aktuationssysteme.

In verwandten Techniken stellt der Fahrwerk-Domänencontroller basierend auf Daten, die von Sensoren während der Fahrt des Fahrzeugs erfasst werden, die Aktuationsparameter der einzelnen Aktuationssysteme ein und realisiert anschließend die Steuerung der aktuellen Fahrt des Fahrzeugs basierend auf den eingestellten Aktuationsparametern.

Bei dem vorstehend genannten Ansatz werden die Aktuationsparameter der Aktuationssysteme jedoch erst dann eingestellt, nachdem sich der Fahrzeugzustand bereits geändert hat. Fährt das Fahrzeug beispielsweise auf einer unebenen Straßenoberfläche, stellt der Fahrwerk-Domänencontroller die Aktuationsparameter des Federungssystems erst ein, nachdem ein Sensor ein Vibrationssignal erfasst hat. Es handelt sich hierbei um eine nachträgliche Steuerung, was zu einer relativ schlechten Performance des Fahrzeugs führt.

### Offenbarung der Erfindung

Die Ausführungsbeispiele der vorliegenden Anmeldung stellen ein Verfahren und eine Vorrichtung zur Fahrwerk-Domänensteuerung eines Fahrzeugs sowie ein Gerät und ein Speichermedium bereit, um somit die Performance des Fahrzeugs zu verbessern.

Gemäß einem ersten Aspekt stellt ein Ausführungsbeispiel der vorliegenden Anmeldung ein Verfahren zur Fahrwerk-Domänensteuerung eines Fahrzeugs bereit. Es umfasst:
Erfassen von Straßeninformationen an einer Zielposition in einer vorgegebenen Navigationsroute und von einer Fahrabsicht zum Anfahren an die Zielposition;
Bestimmen von Ausgabeparametern einer Zielsteuerfunktion in einem Fahrwerk-Domänencontroller gemäß den Straßeninformationen und der Fahrabsicht, und Bestimmen von Aktuationsparametern eines Fahrwerk-Domänen-Aktuationssystems des Fahrzeugs gemäß den Ausgabeparametern; und
Steuern des Aktuationssystems mit den Aktuationsparametern, sodass das Fahrzeug bis zu der Zielposition fährt.

Bei einer möglichen Ausführungsform ist vorgesehen, dass das Bestimmen von Ausgabeparametern einer Zielsteuerfunktion in einem Fahrwerk-Domänencontroller gemäß den Straßeninformationen und der Fahrabsicht umfasst:
Bestimmen eines zukünftigen Zieltrajektorienzustandsmodus, der den Straßeninformationen und der Fahrabsicht entspricht;
Bestimmen der Zielsteuerfunktion, die auf den zukünftigen Zieltrajektorienzustandsmodus abgestimmt ist, und eines Zielarbeitsmodus der Zielsteuerfunktion, wobei der Zielarbeitsmodus Arbeitsparameter aufweist; und
Bestimmen der Ausgabeparameter der Zielsteuerfunktion gemäß den Arbeitsparametern des Zielarbeitsmodus.

Bei einer möglichen Ausführungsform ist vorgesehen, dass das Bestimmen der Zielsteuerfunktion, die auf den zukünftigen Zieltrajektorienzustandsmodus abgestimmt ist, und des Zielarbeitsmodus der Zielsteuerfunktion umfasst:
Bestimmen der Zielsteuerfunktion, die auf den zukünftigen Zieltrajektorienzustandsmodus abgestimmt ist, und des Zielarbeitsmodus der Zielsteuerfunktion gemäß einer vorgegebenen Abbildungsbeziehung,
wobei die vorgegebene Abbildungsbeziehung eine Abbildungsbeziehung zwischen dem zukünftigen Trajektorienzustandsmodus, der Steuerfunktion und dem Arbeitsmodus der Steuerfunktion kennzeichnet.

Bei einer möglichen Ausführungsform ist vorgesehen, dass die Ausgabeparameter der Zielsteuerfunktion eines oder mehrere der Folgenden umfassen: Zielgiermoment, Zielwankmoment, Zielnickmoment, Ziel-Längsbeschleunigung, Ziel-Querbeschleunigung und Ziel-Vertikalbeschleunigung.

Bei einer möglichen Ausführungsform ist vorgesehen, dass die Straßeninformationen und die Fahrabsicht einem Zieltrajektorienzustandsmodus entsprechen, wobei das Bestimmen von Aktuationsparametern des Fahrwerk-Domänen-Aktuationssystems des Fahrzeugs gemäß den Ausgabeparametern umfasst:
Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten.

Bei einer möglichen Ausführungsform ist vorgesehen, dass das Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten, umfasst:
Bestimmen einer Ziel-Arbitrierungsstrategie, die auf den zukünftigen Zieltrajektorienzustandsmodus abgestimmt ist;
Durchführen einer Arbitrierung der Ausgabeparameter gemäß der Ziel-Arbitrierungsstrategie, um arbitrierte Ausgabeparameter zu erhalten; und
Zerlegen der arbitrierten Ausgabeparameter, um die Aktuationsparameter des Aktuationssystems in dem zukünftigen Zieltrajektorienzustandsmodus zu erhalten.

Bei einer möglichen Ausführungsform ist vorgesehen, dass das Zerlegen der arbitrierten Ausgabeparameter, um die Aktuationsparameter des Aktuationssystems in dem zukünftigen Zieltrajektorienzustandsmodus zu erhalten, umfasst:
Zerlegen der arbitrierten Ausgabeparameter, um Ziel-Ausgabeparameter in mehreren Richtungen zu erhalten;
Zuweisen von Aktuationsunterparametern für das Aktuationssystem in jeder Richtung gemäß dem zukünftigen Zieltrajektorienzustandsmodus und den Ziel-Ausgabeparametern in jeder Richtung; und
Erhalten der Aktuationsparameter des Aktuationssystems in dem zukünftigen Zieltrajektorienzustandsmodus gemäß den Aktuationsunterparametern in den einzelnen Richtungen.

Bei einer möglichen Ausführungsform ist vorgesehen, dass das Zuweisen von Aktuationsunterparametern für das Aktuationssystem in jeder Richtung gemäß dem zukünftigen Zieltrajektorienzustandsmodus und den Ziel-Ausgabeparametern in jeder Richtung umfasst:
Bestimmen eines grundlegenden Zuweisungskoeffizienten in jeder Richtung und eines Einstellkoeffizienten in jeder Richtung für das Aktuationssystem gemäß dem zukünftigen Zieltrajektorienzustandsmodus; und
Bestimmen der Aktuationsunterparameter des Aktuationssystems in jeder Richtung gemäß den Ziel-Ausgabeparametern in jeder Richtung, dem grundlegenden Zuweisungskoeffizienten des Aktuationssystems in jeder Richtung und dem Einstellkoeffizienten des Aktuationssystems in jeder Richtung.

Bei einer möglichen Ausführungsform ist vorgesehen, dass die Straßeninformationen eines oder mehrere der Folgenden umfassen: Straßenkategorie, Stauzustand und Typ der Fahrbahnoberflächenhaftung.

Bei einer möglichen Ausführungsform ist vorgesehen, dass die Straßeninformationen den Typ der Fahrbahnoberflächenhaftung umfassen und das Verfahren ferner umfasst:
Erfassen eines anfänglichen Fahrbahnoberflächen-Haftungsfaktors an der Zielposition in der vorgegebenen Navigationsroute und der Wetterinformationen in einem vorgegebenen Zeitraum, wobei der anfängliche Fahrbahnoberflächen-Haftungsfaktor basierend auf Fahrwerksdynamikberechnung ermittelt wird und ein Zuverlässigkeitskennbit und einen Auslöseschwellwert aufweist;
Bestimmen gemäß dem Zuverlässigkeitskennbit und dem Auslöseschwellwert, ob der anfängliche Fahrbahnoberflächen-Haftungsfaktor zuverlässig ist;
Bestimmen des anfänglichen Typs der Fahrbahnoberflächenhaftung, der dem anfänglichen Fahrbahnoberflächen-Haftungsfaktor entspricht, als der Typ der Fahrbahnoberflächenhaftung, wenn er zuverlässig ist; und
Bestimmen eines nachfolgenden Typs der Fahrbahnoberflächenhaftung gemäß den Wetterinformationen und Bestimmen des nachfolgenden Typs der Fahrbahnoberflächenhaftung als der Typ der Fahrbahnoberflächenhaftung, wenn er nicht zuverlässig ist.

Gemäß einem zweiten Aspekt stellt ein Ausführungsbeispiel der vorliegenden Anmeldung eine Fahrwerk-Domänensteuervorrichtung eines Fahrzeugs bereit. Sie umfasst:
ein Erfassungsmodul zum Erfassen von Straßeninformationen an einer Zielposition in einer vorgegebenen Navigationsroute und von einer Fahrabsicht zum Anfahren an die Zielposition;
ein Bestimmungsmodul zum Bestimmen von Ausgabeparametern einer Zielsteuerfunktion gemäß den Straßeninformationen und der Fahrabsicht und zum Bestimmen von Aktuationsparametern eines Fahrwerk-Domänen-Aktuationssystems des Fahrzeugs gemäß den Ausgabeparametern; und
ein Steuermodul, das dazu dient, das Aktuationssystem mit den Aktuationsparametern zu steuern, sodass das Fahrzeug bis zu der Zielposition fährt.

Gemäß einem dritten Aspekt stellt ein Ausführungsbeispiel der vorliegenden Anmeldung ein elektronisches Gerät bereit. Es umfasst: einen Speicher und einen Prozessor,
wobei in dem Speicher computerausführbare Anweisungen gespeichert sind,
wobei der Prozessor die in dem Speicher gespeicherten computerausführbaren Anweisungen ausführt, um das Durchführen des ersten Aspekts und/oder der verschiedenen möglichen Ausführungsformen im ersten Aspekt durch den Prozessor zu ermöglichen.

Gemäß einem vierten Aspekt stellt ein Ausführungsbeispiel der vorliegenden Anmeldung ein computerlesbares Speichermedium bereit, wobei in dem computerlesbaren Speichermedium computerausführbare Anweisungen gespeichert sind, die bei deren Ausführen durch einen Prozessor zur Verwirklichung des ersten Aspekts und/oder der verschiedenen möglichen Ausführungsformen im ersten Aspekt verwendet werden.

Gemäß einem fünften Aspekt stellt ein Ausführungsbeispiele der vorliegenden Anmeldung ein Computerprogrammprodukt bereit, das ein Computerprogramm umfasst, wobei das Computerprogramm bei dessen Ausführen durch einen Prozessor den ersten Aspekt und/oder die verschiedenen möglichen Ausführungsformen im ersten Aspekt verwirklicht.

Die Ausführungsbeispiele der vorliegenden Anmeldung stellen ein Verfahren und eine Vorrichtung zur Fahrwerk-Domänensteuerung eines Fahrzeugs sowie ein Gerät und ein Speichermedium bereit. Dabei erfasst ein Fahrwerk-Domänencontroller Straßeninformationen an einer Zielposition in einer vorgegebenen Navigationsroute und eine Fahrabsicht zum Anfahren an die Zielposition und bestimmt Ausgabeparameter einer Zielsteuerfunktion, die auf die Straßeninformationen und die Fahrabsicht abgestimmt ist. Das heißt, ein Steuerungsziel der Zielsteuerfunktion in dem Fahrwerk-Domänencontroller wird ermittelt. Basierend auf diesen Ausgabeparametern werden dann für das einzelne Aktuationssystem die diesem entsprechenden Aktuationsparameter zugewiesen, sodass die einzelnen Aktuationssysteme mit diesen Aktuationsparameter betreiben, wodurch das Fahrzeug bis zu der Zielposition fahren kann. Auf diese Weise kann der Fahrwerk-Domänencontroller basierend auf der Fahrabsicht und den Straßeninformationen im Voraus das Steuerungsziel der Zielsteuerfunktion vorhersagen, das besser für die Straßenverhältnisse an der Zielposition geeignet ist. Folglich kann ein Steuerungsziel für jedes Aktuationssystem ermittelt werden, das besser für die Straßenverhältnisse an der Zielposition geeignet ist. Dies ermöglicht es den einzelnen Aktuationssystemen, das Fahrzeug basierend auf den Steuerungszielen zu steuern, die besser für die Straßenverhältnisse an der Zielposition geeignet sind, sodass das Fahrzeug stabiler bis zu der Zielposition fahren kann, wodurch die Performance des Fahrzeugs verbessert wird. Beispielsweise können somit die Stabilität, der Fahrkomfort und das Benutzererlebnis des Fahrzeugs verbessert werden.

### Kurzbeschreibung der Figuren

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung. Darin zeigen:
Fig. 1 eine schematische Darstellung eines Anwendungsszenarios nach der vorliegenden Anmeldung;
Fig. 2 ein erstes schematisches Ablaufdiagramm eines Verfahrens zur Fahrwerk-Domänensteuerung eines Fahrzeugs nach der vorliegenden Anmeldung;
Fig. 3 ein zweites schematisches Ablaufdiagramm des Verfahrens zur Fahrwerk-Domänensteuerung eines Fahrzeugs nach der vorliegenden Anmeldung;
Fig. 4 eine schematische Darstellung eines Anwendungsszenarios nach einem Ausführungsbeispiel der vorliegenden Anmeldung;
Fig. 5 eine schematische Darstellung der Verarbeitungslogik einer Steuerfunktion nach einem Ausführungsbeispiel der vorliegenden Anmeldung;
Fig. 6 ein drittes schematisches Ablaufdiagramm des Verfahrens zur Fahrwerk-Domänensteuerung eines Fahrzeugs nach der vorliegenden Anmeldung;
Fig. 7 eine schematische Strukturansicht einer Fahrwerk-Domänensteuervorrichtung eines Fahrzeugs nach der vorliegenden Anmeldung;
Fig. 8 eine schematische Strukturansicht eines elektronischen Geräts nach der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, den Fachleuten auf diesem Gebiet den Grundgedanken der vorliegenden Anmeldung unter Bezugnahme auf spezifische Ausführungsbeispiele der vorliegenden Anmeldung zu erläutern.

### Ausführliche Ausführungsformen

Nun werden beispielhafte Ausführungsbeispiele im Detail beschrieben, die in den Zeichnungen beispielhaft dargestellt sind. In der nachfolgenden Beschreibung, die sich auf die Zeichnungen bezieht, bezeichnen die gleichen Bezugszeichen in den verschiedenen Zeichnungen die gleichen oder ähnlichen Elemente, sofern nichts anderes angegeben ist. Die in den folgenden Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Einrichtungen und Verfahren, die mit einigen, in den beigefügten Ansprüchen beschriebenen Aspekten der vorliegenden Anmeldung übereinstimmen.

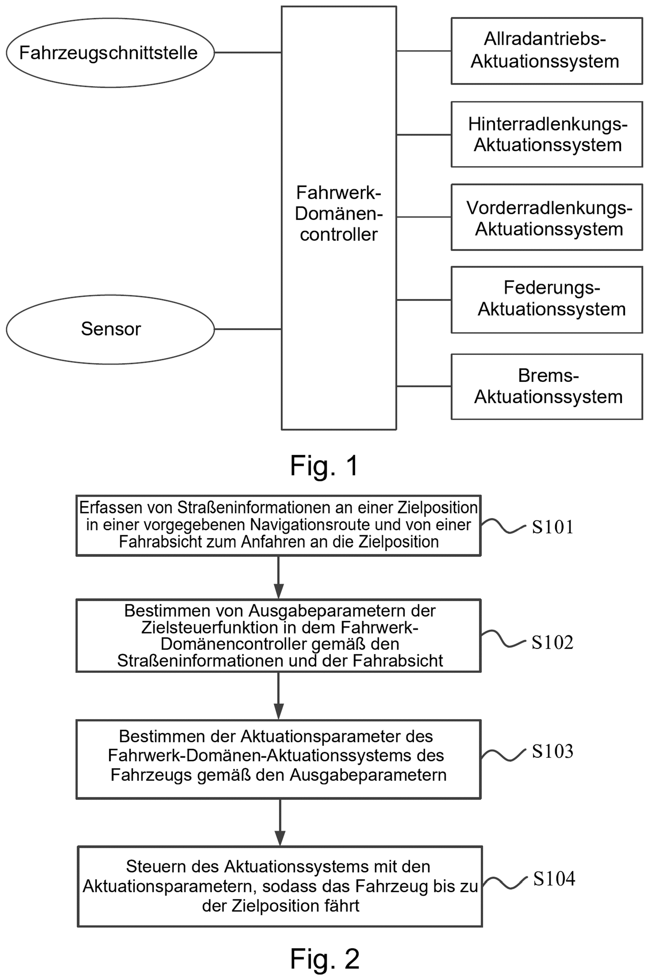

Fig. 1 zeigt eine schematische Darstellung eines Anwendungsszenarios nach der vorliegenden Anmeldung. Wie in Fig. 1 gezeigt, umfasst ein Fahrzeug ein Infotainmentsystem, einen Fahrwerk-Domänencontroller, mehrere Arten von Sensoren und mehrere Arten von Aktuationssystemen.

Das Infotainmentsystem ist mit Kartendaten vorgerüstet und kann basierend auf einem vom Benutzer eingegebenen Zielort in Kombination mit der aktuellen Position des Fahrzeugs eine Routenplanung und Navigationsführung durchführen.

Die Sensoren dienen der Erfassung relevanter Daten während der Fahrt des Fahrzeugs. Sie können beispielsweise Wegsensoren für Fahrpedal und Bremspedal, eine inertiale Messeinheit (Inertial Measurement Unit, IMU) usw. sein. Diesbezüglich liegt bei den Ausführungsbeispielen der vorliegenden Anmeldung keine Einschränkung vor.

Der Fahrwerk-Domänencontroller ist die zentrale Steuereinheit des Fahrwerksbereichs des Fahrzeugs und ist für die Koordination und Verwaltung der Arbeit der einzelnen Aktuationssysteme verantwortlich. Ausführungsbeispiele der vorliegenden Anmeldung können durch den Fahrwerk-Domänencontroller des Fahrzeugs ausgeführt werden.

Die Aktuationssysteme dienen der Realisierung konkreter Funktionen, wie z. B. Lenkung, Federung, Bremsung und andere Funktionen. Jedes Aktuationssystem umfasst eine elektronische Steuereinheit (Electronic Control Unit, ECU) und einen entsprechenden Aktuator. Beispielhaft können die Aktuationssysteme sein:
(1) Allradantriebs-Aktuationssystem, das eine Allradantriebs (All-Wheel Drive, AWD)-ECU und einen entsprechenden Aktuator umfasst. Dabei kann der Aktuator beispielsweise einen Antriebsmotor, eine Kupplung, ein Differentialgetriebe usw. umfassen. Die Allradantriebs-ECU kann Aktuationsparameter (z. B. ein Ziel-Antriebsmoment) vom Fahrwerk-Domänencontroller empfangen und den entsprechenden Aktuator mit diesen Aktuationsparametern steuern, um das Antreiben des Fahrzeugs zu realisieren.
(2) Hinterradlenkungs-Aktuationssystem, das eine Hinterradlenkungs (Rear-Wheel Steering)-ECU und einen entsprechenden Aktuator umfasst, wobei der Aktuator beispielsweise einen Lenkmotor umfassen kann. Die Hinterradlenkungs-ECU kann Aktuationsparameter (z. B. ein Ziel-Lenkmoment) vom Fahrwerk-Domänencontroller empfangen und den entsprechenden Aktuator mit diesen Aktuationsparametern steuern, um die Lenkungssteuerung des Fahrzeugs zu realisieren.
(3) Vorderradlenkungs-Aktuationssystem, das, ähnlich dem Hinterradlenkungs-Aktuationssystem, eine Vorderradlenkungs (Front-Wheel Steering)-ECU und einen entsprechenden Aktuator umfasst und hier nicht erneut beschrieben wird.
(4) Federungs-Aktuationssystem, das eine Federungs (Suspension)-ECU und einen entsprechenden Aktuator umfasst, wobei der Aktuator beispielsweise einen Stoßdämpfer (halbaktiver oder vollaktiver Stoßdämpfer), eine Luftfeder usw. umfassen kann. Die Federungs-ECU kann Aktuationsparameter (z. B. ein Ziel-Wankmoment, ein ZielGiermoment) vom Fahrwerk-Domänencontroller empfangen und den entsprechenden Aktuator mit diesen Aktuationsparametern steuern, um die Fahrzeugkarosserieneigung zu verringern und die Handlingstabilität des Fahrzeugs zu verbessern.
(5) Brems-Aktuationssystem, das eine Brems (Brake)-ECU und einen entsprechenden Aktuator umfasst, wobei der Aktuator beispielsweise einen Bremssattel und einen Bremszylinder (Bremskraftverstärker/Hauptbremszylinder) umfassen kann. Die Brems-ECU kann Aktuationsparameter (z. B. ein Ziel-Bremsmoment) vom Fahrwerk-Domänencontroller empfangen und den entsprechenden Aktuator mit diesen Aktuationsparametern steuern, um eine Bremskraft zu erzeugen und so die Bremssteuerung des Fahrzeugs zu realisieren.

Es ist zu beachten, dass Fig. 1 fünf Aktuationssysteme, nämlich das Allradantriebs-Aktuationssystem, das Hinterradlenkungs-Aktuationssystem, das Vorderradlenkungs-Aktuationssystem, das Federungs-Aktuationssystem und das Brems-Aktuationssystem, als Beispiel zeigt. Die Ausführungsbeispiele der vorliegenden Anmeldung beschränken weder die Art und Anzahl der in dem Fahrwerksbereich enthaltenen Aktuationssysteme noch die Art und Anzahl der in jedem Aktuationssystem enthaltenen Aktuatoren.

Unter Bezugnahme auf die verschiedenen in Fig. 1 dargestellten Aktuationssysteme kann der Fahrwerk-Domänencontroller während der Fahrt des Fahrzeugs basierend auf den von Sensoren erfassten Daten die Parameter der einzelnen Aktuationssysteme einstellen und dann die Aktuationssysteme basierend auf den eingestellten Parametern steuern, um die Steuerung des Fahrzeugs zu realisieren. Bei dem vorstehend genannten Ansatz werden die Aktuationsparameter der Aktuationssysteme jedoch erst dann angepasst, nachdem sich der Fahrzeugzustand bereits geändert hat. Fährt das Fahrzeug beispielsweise auf einer unebenen Straßenoberfläche, stellt der Fahrwerk-Domänencontroller die Aktuationsparameter der Federungs-ECU erst ein, nachdem der Sensor ein Vibrationssignal erfasst hat. Es handelt sich hierbei um eine nachträgliche Steuerung, was zu einer relativ schlechten Performance des Fahrzeugs führt. Daher stellt die vorliegende Anmeldung ein Verfahren zur Fahrwerk-Domänensteuerung eines Fahrzeugs bereit, welches Verfahren basierend auf den Straßenverhältnissen der zu befahrenden Straße die Aktuationsparameter der einzelnen Aktuationssysteme unter diesen Straßenverhältnisse im Voraus vorhersagt und dann die Aktuationssysteme basierend auf den vorhergesagten Aktuationsparametern steuert, um eine vorzeitige Anpassung zu erreichen und dadurch die Performance des Fahrzeugs wie die Stabilität und den Komfort zu verbessern.

Im Folgenden wird anhand konkreter Ausführungsbeispiele detailliert beschrieben, wie die technische Lösung der vorliegenden Anmeldung aussieht und wie die technische Lösung der vorliegenden Anmeldung die oben genannten technischen Probleme löst. Die folgenden konkreten Ausführungsbeispiele können miteinander kombiniert werden, und in einigen Ausführungsbeispielen werden gleiche oder ähnliche Konzepte oder Prozesse möglicherweise nicht wiederholt erläutert. Die Ausführungsbeispiele der vorliegenden Anmeldung werden nachstehend in Verbindung mit den beigefügten Zeichnungen beschrieben.

Fig. 2 zeigt ein erstes schematisches Ablaufdiagramm des Verfahrens zur Fahrwerk-Domänensteuerung eines Fahrzeugs nach der vorliegenden Anmeldung. Wie sich aus Fig. 2 ergibt, umfasst das Verfahren:
S101. Erfassen von Straßeninformationen an einer Zielposition in einer vorgegebenen Navigationsroute und von einer Fahrabsicht zum Anfahren an die Zielposition.

Die vorgegebene Navigationsroute kennzeichnet eine bereits geplante Navigationsroute. Die Zielposition kennzeichnet eine Position in der vorgegebenen Navigationsroute, die eine vorgegebene Entfernung von der aktuellen Position des Fahrzeugs entfernt liegt, d. h., eine vor dem Fahrzeug liegende, zu befahrende Position. Die vorliegende Anmeldung beschränkt den Abstand zwischen der Zielposition und der aktuellen Position des Fahrzeugs hier nicht.

Die Straßeninformationen dienen der Kennzeichnung der Straßenverhältnisse an der Zielposition. Diese Straßeninformationen können eines oder mehrere der folgenden Informationen umfassen: Straßenkategorie, Stauzustand und Typ der Fahrbahnoberflächenhaftung. Darunter können Straßentypen beispielsweise Stadtstraßen, Autobahnen, Hochstraßen usw. umfassen und diesbezüglich liegt bei den Ausführungsbeispielen der vorliegenden Anmeldung keine Einschränkung vor. Der Stauzustand dient der Kennzeichnung der Staubedingung und kann "Stau" oder "kein Stau" sein. Der Typ der Fahrbahnoberflächenhaftung dient der Kennzeichnung des Fahrbahnmaterials und des Oberflächenzustands der Fahrbahn. Beispielsweise kann sie "geringe Haftung", "schwache Haftung", "normale Haftung" oder "starke Haftung" usw. sein und diesbezüglich liegt bei den Ausführungsbeispielen der vorliegenden Anmeldung keine Einschränkung vor.

Die Fahrabsicht kennzeichnet die Fahrweise des Fahrers beim Fahren von der aktuellen Position des Fahrzeugs bis zu der Zielposition. Diese Fahrabsicht kann beispielsweise "langsame Durchfahrt", "normale Durchfahrt" oder "zügige Durchfahrt" sein.

In einem Beispiel kann der Fahrwerk-Domänencontroller den Öffnungsgrad eines Wegsensors des Bremspedals und den Öffnungsgrad eines Wegsensors des Fahrpedals erfassen und die erfassten Sensordaten basierend auf einem vorgegebenen maschinellen Lernalgorithmus, wie z. B. einem neuronalen Netzwerkalgorithmus, verarbeiten, um eine Längsbeschleunigung des Fahrzeugs zu bestimmen, basierend auf dieser Längsbeschleunigung und der aktuellen Fahrzeuggeschwindigkeit die vom Fahrer benötigte Zeit von der aktuellen Position bis zu der Zielposition zu bestimmen und dann die Fahrabsicht durch Vergleichen der benötigten Zeit mit einem vorgegebenen Zeitschwellenwert und durch deren Klassifizieren zu bestimmen. Gleichzeitig kann der Fahrwerk-Domänencontroller Navigationsrouteninformationen vom Infotainmentsystem des Fahrzeugs oder von einem Cloud-Server abrufen und aus diesen Navigationsrouteninformationen die Straßeninformationen an der Zielposition extrahieren.

S102. Bestimmen von Ausgabeparametern der Zielsteuerfunktion in dem Fahrwerk-Domänencontroller gemäß den Straßeninformationen und der Fahrabsicht.

Beispielhaft kann die Verarbeitungslogik des Fahrwerk-Domänencontrollers im Voraus in verschiedene Steuerfunktionen unterteilt werden. Jede Steuerfunktion ist mit einer jeweiligen Verarbeitungslogik vorgerüstet, die zur Realisierung einer spezifischen Berechnungsverarbeitung dient und Ausgabeparameter liefert. Diese Steuerfunktion kann beispielsweise eine Vorstabilisierungssteuerung, eine variable Fahrsteuerung, eine integrierte Start-Stopp-Steuerung oder eine Fahrzeuglage-Koordinationssteuerung usw. sein. Die Zielsteuerfunktion kennzeichnet die Steuerfunktion, die auf den Straßeninformationen und der Fahrabsicht abgestimmt ist. Die Ausgabeparameter der Zielsteuerfunktion kennzeichnen das Steuerungsziel dieser Zielsteuerfunktion.

In einigen denkbaren Verwirklichungsmöglichkeiten kann der Fahrwerk-Domänencontroller eine Korrespondenz zwischen Kombinationen von Straßeninformationen und Fahrabsicht einerseits und Steuerfunktionen andererseits im Voraus festlegen. Dann kann basierend auf dieser Korrespondenz die Zielsteuerfunktion bestimmt werden, die auf die Kombination aus diesen Straßeninformationen und dieser Fahrabsicht abgestimmt ist. Anschließend kann basierend auf der dieser Zielsteuerfunktion entsprechenden Verarbeitungslogik eine Berechnungsverarbeitung durchgeführt werden, um die Ausgabeparameter dieser Zielsteuerfunktion zu erhalten.

In einigen denkbaren Verwirklichungsmöglichkeiten kann der Fahrwerk-Domänencontroller mit einem ersten Vorhersagemodell vorgerüstet werden, in das die Straßeninformationen und die Fahrabsicht eingeben werden, und die Zielsteuerfunktion und die Ausgabeparameter dieser Zielsteuerfunktion ausgeben. Dieses erste Vorhersagemodell kann durch Training basierend auf Beispiel-Straßeninformationen und Beispiel-Fahrabsichten sowie Beispiel-Steuerfunktionen und entsprechenden Ausgabeparametern erhalten werden. Die Ausführungsbeispiele der vorliegenden Anmeldung beschränken den Typ dieses ersten Vorhersagemodells nicht und dabei kann es sich beispielsweise um ein neuronales Netzwerkmodell handeln.

Optional können die Ausgabeparameter der Zielsteuerfunktion eines oder mehrere der Parameter umfassen: Zielgiermoment, Zielwankmoment, Zielnickmoment, Ziel-Längsbeschleunigung, Ziel-Querbeschleunigung und Ziel-Vertikalbeschleunigung. Konkrete Parameter hängen von der Einstellung der Steuerfunktion ab und diesbezüglich liegt bei den Ausführungsbeispielen der vorliegenden Anmeldung keine Einschränkung vor. Es ist zu beachten, dass die oben genannten Ausgabeparameter der Zielsteuerfunktion Erwartungswerte sind, die das Fahrwerk-Domänen-Aktuationssystem erreichen soll und die der Fahrwerk-Domänencontroller nach der Berechnungsverarbeitung gemäß der der Zielsteuerfunktion entsprechenden Verarbeitungslogik erhält.

Es ist verständlich, dass die Straßeninformationen eng mit den Steuerfunktionen im Fahrwerk-Domänencontroller zusammenhängen, aber auch die Fahrabsicht die Steuerfunktionen im Fahrwerk-Domänencontroller beeinflusst. Beispielsweise kann der Fahrwerk-Domänencontroller basierend auf der Fahrabsicht die Ausgangsleistung des Antriebssystems anpassen. Wenn die Fahrabsicht "zügige Durchfahrt" ist, kann die Leistungsabgabe des Antriebssystems erhöht werden, um der Absicht des Fahrers gerecht zu werden, schnell anzukommen. Es können auch basierend auf der Fahrabsicht entsprechende Anpassungen an den Aktuationssystemen wie Fahrzeugfederung, Lenkung usw. vorgenommen werden. Wenn die Fahrabsicht "zügige Durchfahrt" ist und es sich bei der Straße an der Zielposition um eine Kurve handelt, kann der Fahrwerk-Domänencontroller die Steifigkeit der Federung erhöhen, um die seitliche Neigung des Fahrzeugs bei der Kurvenfahrt zu verringern und die Behandlungsstabilität zu verbessern. Daher können durch die Straßeninformationen und die Fahrabsicht die zukünftige Fahrbahnzustände der Straße genauer und umfassender widergespiegelt werden, wodurch ein besser für die zukünftigen Fahrbahnzustände geeignetes Steuerungsziel bestimmt werden kann.

S103. Bestimmen der Aktuationsparameter des Fahrwerk-Domänen-Aktuationssystems des Fahrzeugs gemäß den Ausgabeparametern.

Beispielsweise, wie bereits erwähnt, kennzeichnen die Ausgabeparameter das Steuerungsziel der Steuerfunktion, und basierend auf den Ausgabeparametern können dann die Aktuationsparameter der einzelnen Aktuationssysteme bestimmt werden. Diese Aktuationsparameter kennzeichnen die Steuerungsziele der Aktuationssysteme. Es ist verständlich, dass für das Steuerungsziel (die Ausgabeparameter) ein und derselben Zielsteuerfunktion möglicherweise die Beteiligung mehrerer Aktuationssysteme erforderlich ist. Daher kann der Fahrwerk-Domänencontroller basierend auf einem vorgegebenen Zuweisungsalgorithmus die Ausgabeparameter angemessen den einzelnen Aktuationssystemen zuweisen und so die Aktuationsparameter der einzelnen Aktuationssysteme erhalten.

Wenn beispielsweise die Zielsteuerfunktion eine Vorstabilisierungssteuerung ist und der Ausgabeparameter dieser Zielsteuerfunktion das Zielgiermoment ist, kann der Fahrwerk-Domänencontroller basierend auf einem vorgegebenen Zuweisungsalgorithmus das Zielgiermoment den einzelnen Aktuationssystemen zuweisen und so das von jedem Aktuationssystem zu realisierende Zielgiermoment (Aktuationsparameter) erhalten. Es ist zu beachten, dass die vorliegende Anmeldung den Typ des Zuweisungsalgorithmus nicht beschränkt.

S104. Steuern des Aktuationssystems mit den Aktuationsparametern, sodass das Fahrzeug bis zu der Zielposition fährt.

Beispielsweise kann der Fahrwerk-Domänencontroller, nachdem er die Aktuationsparameter der einzelnen Aktuationssysteme bestimmt hat, diese Aktuationsparameter an die ECU der entsprechenden Aktuationssysteme senden, sodass die ECU der Aktuationssystem diese Aktuationsparameter ausführen und die Aktuatoren der jeweiligen Aktuationssysteme steuern, wodurch das Fahrzeug so gesteuert werden kann, dass es bis zur Zielposition fährt.

Bei dem Verfahren zur Fahrwerk-Domänensteuerung eines Fahrzeugs gemäß den Ausführungsbeispielen der vorliegenden Anmeldung erfasst der Fahrwerk-Domänencontroller Straßeninformationen an der Zielposition in der vorgegebenen Navigationsroute und die Fahrabsicht zum Anfahren an die Zielposition, bestimmt Ausgabeparameter der Zielsteuerfunktion, die auf die Straßeninformationen und die Fahrabsicht abgestimmt sind, d. h., erhält das Steuerungsziel der Zielsteuerfunktion, und weist dann basierend auf diesen Ausgabeparametern dem einzelnen Aktuationssystem die diesem entsprechenden Aktuationsparameter zu, sodass die einzelnen Aktuationssysteme diese Aktuationsparameter ausführen, wodurch das Fahrzeug bis zur Zielposition fahren kann. Auf diese Weise kann der Fahrwerk-Domänencontroller basierend auf der Fahrabsicht und den Straßeninformationen im Voraus das Steuerungsziel der Zielsteuerfunktion vorhersagen, das besser für die Straßenverhältnisse an der Zielposition geeignet ist. Folglich kann ein Steuerungsziel für jedes Aktuationssystem ermittelt werden, das besser für die Straßenverhältnisse an der Zielposition geeignet ist. Dies ermöglicht es den einzelnen Aktuationssystemen, das Fahrzeug basierend auf den Steuerungszielen zu steuern, die besser für die Straßenverhältnisse an der Zielposition geeignet sind, sodass das Fahrzeug stabiler bis zu der Zielposition fahren kann, wodurch die Performance des Fahrzeugs verbessert wird. Beispielsweise können somit die Stabilität, der Fahrkomfort und das Benutzererlebnis des Fahrzeugs verbessert werden.

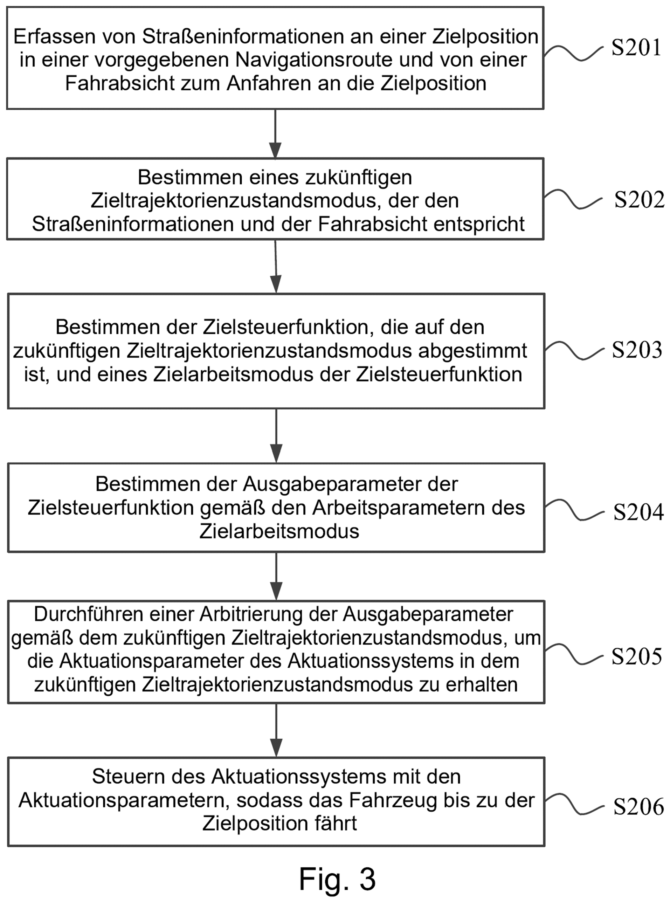

Fig. 3 zeigt ein zweites schematisches Ablaufdiagramm des Verfahrens zur Fahrwerk-Domänensteuerung eines Fahrzeugs nach der vorliegenden Anmeldung. Wie sich aus Fig. 3 ergibt, erläutert das vorliegende Ausführungsbeispiel das Verfahren zur Fahrwerk-Domänensteuerung eines Fahrzeugs auf der Grundlage des in Fig. 2 dargestellten Ausführungsbeispiels detailliert. Das Verfahren umfasst:
S201. Erfassen von Straßeninformationen an einer Zielposition in einer vorgegebenen Navigationsroute und von einer Fahrabsicht zum Anfahren an die Zielposition.

Dabei können die Straßeninformationen eines oder mehrere der Folgenden umfassen: Straßenkategorie, Stauzustand und Typ der Fahrbahnoberflächenhaftung.

In einigen denkbaren Verwirklichungsmöglichkeiten werden ein anfänglicher Fahrbahnoberflächen-Haftungsfaktor an der Zielposition in der vorgegebenen Navigationsroute und die Wetterinformationen in einem vorgegebenen Zeitraum erfasst; wobei der anfängliche Fahrbahnoberflächen-Haftungsfaktor basierend auf einer Fahrwerksdynamikberechnung ermittelt wird und ein Zuverlässigkeitskennbit und einen Auslöseschwellwert aufweist; gemäß dem Zuverlässigkeitskennbit und dem Auslöseschwellwert wird bestimmt, ob der anfängliche Fahrbahnoberflächen-Haftungsfaktor zuverlässig ist; der anfänglichen Typ der Fahrbahnoberflächenhaftung, der dem anfänglichen Fahrbahnoberflächen-Haftungsfaktor entspricht, wird als der Typ der Fahrbahnoberflächenhaftung bestimmt, wenn dies der Fall ist; ein nachfolgender Typ der Fahrbahnoberflächenhaftung wird gemäß den Wetterinformationen bestimmt und der nachfolgende Typ der Fahrbahnoberflächenhaftung wird als der Typ der Fahrbahnoberflächenhaftung bestimmt, wenn er nicht zuverlässig ist.

Konkret kann der Fahrwerk-Domänencontroller über verschiedene Arten von Sensoren in einem Fahrwerkdynamiksystem (wie Raddrehzahlsensor, Beschleunigungssensor usw.) in Echtzeit die Wechselwirkung zwischen den Rädern und dem Boden während der Fahrt des Fahrzeugs überwachen und anhand eines vorgegebenen Algorithmus den anfänglichen Fahrbahnoberflächen-Haftungsfaktor berechnen.

Das Zuverlässigkeitskennbit dieses anfänglichen Fahrbahnoberflächen-Haftungsfaktors ist eine Kennzeichnung der Zuverlässigkeit des durch den Fahrwerk-Domänencontroller auf Basis der Fahrwerkdynamik berechneten Fahrbahnoberflächen-Haftungsfaktors. Es kann durch mehrere Faktoren bestimmt werden, z. B. ob der Arbeitszustand der Sensoren normal ist, ob die Datenerfassung in einem angemessenen Bereich liegt usw. Wenn beispielsweise ein Sensor ausfällt, können die erfassten Daten ungenau sein; in diesem Fall zeigt das Plausibilitätskennbit einen "unplausiblen" Zustand an. Wenn die Sensoren normal arbeiten und die erfassten Daten den vorgegebenen Standards entsprechen, zeigt das Plausibilitätskennbit einen "zuverlässigen" Zustand an. Der Auslöseschwellwert kennzeichnet einen Schwellwertbereich, der bestimmt, ob der Typ der Fahrbahnoberflächenhaftung aktualisiert wird.

Wenn sowohl der Auslöseschwellwert als auch das Plausibilitätskennbit die vorgegebenen Bedingungen erfüllen, bedeutet dies, dass der anfängliche Fahrbahnoberflächen-Haftungsfaktor innerhalb eines vorgegebenen Bereichs liegt und die Daten zuverlässig sind, d. h., der anfängliche Fahrbahnoberflächen-Haftungsfaktor ist zuverlässig. Dann kann der anfängliche Typ der Fahrbahnoberflächenhaftung, der dem anfänglichen Fahrbahnoberflächen-Haftungsfaktor entspricht, als der Typ der Fahrbahnoberflächenhaftung bestimmt werden. Wenn beispielsweise der durch fahrwerkdynamische Berechnung ermittelte anfängliche Fahrbahnoberflächen-Haftungsfaktor einem Typ mit hoher Haftung entspricht, und beide Bedingungen erfüllt sind, wird der Typ der Fahrbahnoberflächenhaftung als "hohe Haftung" bestimmt. Wenn der Auslöseschwellwert und/oder das Plausibilitätskennbit die vorgegebenen Bedingungen nicht erfüllen, bedeutet dies, dass der anfängliche Fahrbahnoberflächen-Haftungsfaktor unzuverlässig ist. Dann werden aus den Informationen der vorgegebenen Navigationsroute die Wetterinformationen für einen vorgegebenen Zeitraum an der Zielposition extrahiert, z. B. die Wetterinformationen der letzten drei Stunden. Anschließend kann basierend auf einer vorgegebenen Korrespondenz zwischen den Wetterinformationen und den Typen der Fahrbahnoberflächenhaftung ein nachfolgender Typ der Fahrbahnoberflächenhaftung bestimmt und dieser nachfolgende Typ als der Typ der Fahrbahnoberflächenhaftung bestimmt werden.

Durch die Kombination der Wetterinformationen mit dem auf Basis der Fahrwerkdynamik berechneten anfänglichen Fahrbahnoberflächen-Haftungsfaktor kann ein genauerer Typ der Fahrbahnoberflächenhaftung für die Straße an der Zielposition erhalten werden. Dies führt zu genaueren Straßeninformationen und kann somit die Genauigkeit der nachfolgenden Aktuationsparameter verbessern.

S202. Bestimmen eines zukünftigen Zieltrajektorienzustandsmodus, der den Straßeninformationen und der Fahrabsicht entspricht.

Beispielsweise kennzeichnet der zukünftige Zieltrajektorienzustandsmodus Straßeninformationen an der Zielposition in der vorgegebenen Navigationsroute und die Fahrabsicht zum Anfahren an die Zielposition. Nachdem die Straßeninformationen an der Zielposition in der vorgegebenen Navigationsroute und die Fahrabsicht zum Anfahren an die Zielposition erfasst wurden, können die Fahrabsicht und die Straßeninformationen integriert werden, um den zukünftigen Zieltrajektorienzustandsmodus zu erhalten. Es ist verständlich, dass verschiedene Kombinationen der Fahrabsicht und der Straßeninformationen möglich sind. Der zukünftige Trajektorienzustandsmodus kann verwendet werden, um eine Kombination der Fahrabsicht und der Straßeninformationen zu kennzeichnen. Jeder zukünftige Trajektorienzustandsmodus weist unterschiedliche Kennungen auf, um verschiedene Kombinationsformen der Fahrabsicht und der Straßeninformationen zu kennzeichnen. Diese Kennung kann ein vom Fahrwerk-Domänencontroller für einzelnen zukünftigen Trajektorienzustandsmodus zugewiesenes Kennbit sein, das dazu dient, jeden zukünftigen Trajektorienzustandsmodus eindeutig zu kennzeichnen.

Optional können bezüglich des Straßentyps basierend auf Straßeneigenschaften wie der Krümmung der Straße oder der Straßensteigung weitere Untertypen festgelegt werden. Diese Untertypen können beispielsweise gerade Straßen, kleine Kurven (Krümmung kleiner als ein vorgegebener Schwellwert), große Kurven (Krümmung größer oder gleich einem vorgegebenen Schwellwert) usw. sein, sodass der zukünftige Trajektorienzustandsmodus die Straßeninformationen und die Fahrabsicht genauer widerspiegeln kann. Beispielsweise zeigt Tabelle 1 ein Beispiel für zukünftige Trajektorienzustandsmodi gemäß einem Ausführungsbeispiel der vorliegenden Anmeldung.

**Tabelle 1: Zukünftige Trajektorienzustandsmodi**

| zukünftiges Trajektorienzustandsmodus | Fahrabsicht | Straßeninformation | | | |
|---|---|---|---|---|---|
| | | Straßentyp | Untertyp | Stauzustand | Typ der Fahrbahnoberflächenhaftung |
| Modus I | | Stadtstraße | kleine Kurve | kein Stau | normal |
| Modus II | | | | Stau | normal |
| Modus III | Zügige Durchfahrt | | gerade Straße | kein Stau | normal |
| Modus IV | | | | Stau | normal |
| Modus V | | Autobahn | gerade Straße | Stau | normal |
| Modus VI | | | | Stau | geringe Haftung |

Daher kann der Fahrwerk-Domänencontroller im Voraus eine Korrespondenz zwischen jedem zukünftigen Trajektorienzustandsmodus einerseits sowie der Fahrabsicht und den Straßeninformationen andererseits festlegen. Somit kann basierend auf dieser Korrespondenz der zukünftige Zieltrajektorienzustandsmodus bestimmt werden, der auf die Fahrabsicht und die Straßeninformationen abgestimmt ist.

S203. Bestimmen der Zielsteuerfunktion, die auf den zukünftigen Zieltrajektorienzustandsmodus abgestimmt ist, und eines Zielarbeitsmodus der Zielsteuerfunktion.

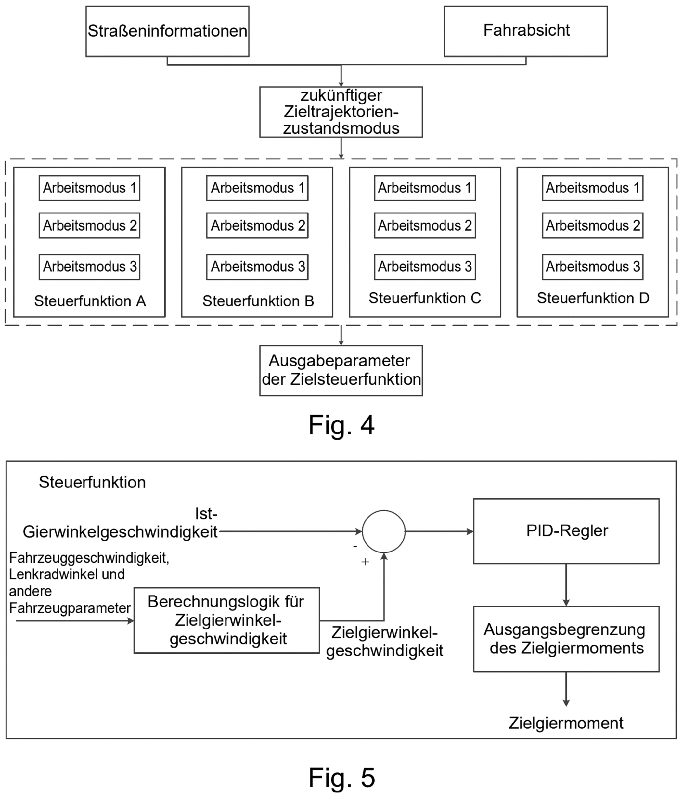

Beispielhaft zeigt Fig. 4 eine schematische Darstellung eines Anwendungsszenarios gemäß einem Ausführungsbeispiel der vorliegenden Anmeldung. Wie in Fig. 4 dargestellt, umfasst der Fahrwerk-Domänencontroller verschiedene Steuerfunktionen. Jede Steuerfunktion weist mehrere Arbeitsmodi auf, und jeder Arbeitsmodus weist Arbeitsparameter auf. Mit anderen Worten haben die Steuerfunktionen in verschiedenen Arbeitsmodi unterschiedliche Arbeitsparameter. Es ist zu beachten, dass Fig. 4 vier Steuerfunktionen als Beispiel zeigt; die Ausführungsbeispiele der vorliegenden Anmeldung beschränken die Anzahl der in einer Steuerfunktion enthaltenen Arbeitsmodi nicht. Der oben genannte Zielarbeitsmodus kennzeichnet den Arbeitsmodus der Zielsteuerfunktion, der auf den zukünftigen Zieltrajektorienzustandsmodus abgestimmt ist, und dieser Zielarbeitsmodus weist Arbeitsparameter auf. Dabei dienen die Arbeitsparameter der Kennzeichnung der Parameter, die für die der Steuerfunktion entsprechende Verarbeitungslogik in verschiedenen Arbeitsmodi erforderlich sind. Die Arbeitsparameter können beispielsweise einen oder mehrere der folgenden Parameter umfassen: Aktivierungsschwellwert der Steuerfunktion; Steuerparameter der Steuerfunktion, z. B. P-, I-, D-Werte eines PID-Reglers; Austrittsschwellwert der Steuerfunktion; Begrenzungsparameter für die Ausgabe der Steuerfunktion, einschließlich Steigungsbegrenzung, Amplitudenbegrenzung usw.; Ein- oder Aus-Zustand der Steuerfunktion.

In einigen denkbaren Verwirklichungsmöglichkeiten kann der Fahrwerk-Domänencontroller mit einem zweiten Vorhersagemodell vorgerüstet werden, in das der zukünftige Zieltrajektorienzustandsmodus eingeben wird, und die Zielsteuerfunktion und den Zielarbeitsmodus dieser Zielsteuerfunktion ausgeben. Dieses zweite Vorhersagemodell kann durch Training basierend auf Beispiel-Zukunftstrajektorienzustandsmodi sowie Beispiel-Steuerfunktionen und entsprechenden Arbeitsmodi erhalten werden. Die Ausführungsbeispiele der vorliegenden Anmeldung beschränken den Typ dieses zweiten Vorhersagemodells nicht und es kann sich beispielsweise um ein neuronales Netzwerkmodell handeln.

In einigen denkbaren Verwirklichungsmöglichkeiten werden die Zielsteuerfunktion, die auf den zukünftigen Zieltrajektorienzustandsmodus abgestimmt ist, und der Zielarbeitsmodus der Zielsteuerfunktion gemäß einer vorgegebenen Abbildungsbeziehung bestimmt; wobei die vorgegebene Abbildungsbeziehung eine Abbildungsbeziehung zwischen dem zukünftigen Trajektorienzustandsmodus, der Steuerfunktion und dem Arbeitsmodus der Steuerfunktion kennzeichnet. Beispielsweise zeigt Tabelle 2 schematisch eine Abbildungsbeziehung nach einem Ausführungsbeispiel der vorliegenden Anmeldung.

**Tabelle 2: Abbildungsbeziehung**

| zukünftiges Trajektorienzustandsmodus | Steuerfunktion | Arbeitsmodus |
|---|---|---|
| Modus I | Steuerfunktion A | Arbeitsmodus 1 |
| | Steuerfunktion B | Arbeitsmodus 2 |
| | Steuerfunktion C | Arbeitsmodus 1 |
| Modus II | Steuerfunktion A | Arbeitsmodus 3 |
| | Steuerfunktion D | Arbeitsmodus 2 |

Auf diese Weise kann der Fahrwerk-Domänencontroller basierend auf dem zukünftigen Trajektorienzustandsmodus einen Arbeitsmodus der Steuerfunktion erhalten, der besser für die zukünftigen Straßenverhältnisse geeignet ist, und ein genaueres Steuerungsziel ausgeben. Zum Beispiel liegt das Steuerungsziel einer Quersteuerungsfunktion bei Kurvenfahrten auf Stadtstraßen darin, den Fahrzeugwendekreis zu verringern, um die Fahrzeugmanövrierfähigkeit zu verbessern. Bei Fahrten auf Autobahnen oder Schnellstraßen hingegen liegt das Steuerungsziel in der Behandlungsstabilität. Es ist ersichtlich, dass das Steuerungsziel derselben Steuerfunktion unter verschiedenen Straßenverhältnissen unterschiedlich ist. Daher kann mit diesem Verfahren erreicht werden, dass der Arbeitsmodus derselben Steuerfunktion unter verschiedenen Fahrbahnzuständen variiert, wodurch ein besser für die zukünftigen Straßenverhältnisse geeignetes Steuerungsziel erzielt und die Fahrzeugleistung verbessert werden kann.

S204. Bestimmen der Ausgabeparameter der Zielsteuerfunktion gemäß den Arbeitsparametern des Zielarbeitsmodus.

Beispielhaft, wie bereits erwähnt, weist die Steuerfunktion eine vorgegebene Verarbeitungslogik auf, und der Arbeitsmodus weist Arbeitsparameter auf. Unter Bezugnahme auf Fig. 4 können nach der Bestimmung des Zielarbeitsmodus der Zielsteuerfunktion die Arbeitsparameter der dieser Zielsteuerfunktion entsprechenden Verarbeitungslogik für die Berechnungsverarbeitung bestimmt und die Ausgabeparameter erhalten werden.

Konkret wird als Zielsteuerfunktion beispielhaft die Vorstabilisierungssteuerung genommen. Hinsichtlich der Verarbeitungslogik dieser Zielsteuerfunktion kann Bezug auf Fig. 5 genommen werden. Fig. 5 zeigt eine schematische Darstellung der Verarbeitungslogik einer Steuerfunktion gemäß einem Ausführungsbeispiel der vorliegenden Anmeldung. Diese Zielsteuerfunktion kann mit einer Verarbeitungslogik vorgerüstet werden, die Eingabedaten (Fahrzeugparameter wie tatsächliche Giergeschwindigkeit, Fahrzeuggeschwindigkeit, Lenkradwinkel usw.), Ausgabedaten (Zielgiermoment) und die Art der Datenverarbeitung (Berechnungslogik für die Zielgiergeschwindigkeit, PID-Regler, Ausgangsbegrenzung des Zielgiermoments) umfasst. Die dem Arbeitsmodus entsprechenden Arbeitsparameter können die Parameter des PID-Reglers in dieser Verarbeitungslogik und die Ausgangsbegrenzungsparameter des ausgegebenen Zielgiermoments festlegen. Nachdem die Zielsteuerfunktion, die auf den zukünftigen Zieltrajektorienzustandsmodus abgestimmt ist, und der Zielarbeitsmodus dieser Zielsteuerfunktion bestimmt wurden, können basierend auf der vorgegebenen Verarbeitungslogik die entsprechenden Daten zur Verarbeitung erfasst werden, um die Ausgabeparameter dieser Zielsteuerfunktion zu erhalten.

S205. Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten.

Beispielsweise können mehrere Steuerfunktionen denselben Ausgabeparameter ausgeben, oder die Priorität der Steuerungsziele kann unter verschiedenen Straßenverhältnissen unterschiedlich sein. Wenn die vorausliegende Straße beispielsweise eine verstopfte Stadtstraße ist, können die Ausgabeparameter einiger Funktionen, die eine hohe Leistungsabgabe erfordern (wie z. B. die Leistungssteigerungsfunktion im Hochleistungs-Fahrmodus), vorübergehend deaktiviert oder angepasst werden, um vorrangig eine stabile Abstandsregelung des Fahrzeugs zu gewährleisten. Daher ist es notwendig, eine Arbitrierung der Ausgabeparameter durchzuführen, um genaue Ausgabeparameter, nämlich präzise Steuerungsziele, zu bestimmen. Im Fahrwerk-Domänencontroller kann im Voraus eine Korrespondenz zwischen zukünftigen Trajektorienzustandsmodi und Arbitrierungsstrategien festgelegt werden. Diese Arbitrierungsstrategie kennzeichnet die Art der Arbitrierungsverarbeitung der Ausgabeparameter. Dabei umfasst die Art der Arbitrierungsverarbeitung eine gewichtete Fusionsverarbeitung, eine Auswahlverarbeitung usw. und diesbezüglich liegt bei den Ausführungsbeispielen der vorliegenden Anmeldung keine Einschränkung vor. Somit kann der Fahrwerk-Domänencontroller die Ziel-Arbitrierungsstrategie bestimmen, die auf den zukünftigen Zieltrajektorienzustandsmodus abgestimmt ist. Basierend auf der durch die Ziel-Arbitrierungsstrategie vorgegebenen Art der Arbitrierungsverarbeitung wird eine Arbitrierung der Ausgabeparameter durchgeführt, um arbitrierte Ausgabeparameter zu erhalten. Diese arbitrierten Ausgabeparameter werden dann den einzelnen Aktuationssystemen zugewiesen, um die Aktuationsparameter des Aktuationssystems im zukünftigen Zieltrajektorienzustandsmodus zu erhalten.

Wie bereits erwähnt, kann mit der Zunahme der Anzahl aktiver elektronisch gesteuerter Komponenten im Fahrwerk ein und dasselbe Fahrwerk-Steuerungsziel durch mehrere Aktuationssysteme realisiert werden. Daher ist eine sinnvolle Arbitrierung erforderlich, um die Gesamtfahrzeugleistung sicherzustellen. Jedoch basiert die Arbitrierung der Fahrwerk-Domänensteuerung in verwandten Techniken meist auf der Fahrwerkdynamik oder einfachen Fahrszenarien und berücksichtigt nicht ausreichend die Auswirkungen von Faktoren wie Straßeninformationen und Fahrabsicht auf die Zuweisungs- und Arbitrierungsprozesse der Aktuationssysteme. Beispielsweise variiert der Arbeitsschwerpunkt von Aktuationssystemen wie AWD, Bremse und Lenkung je nach Straßentyp. Darüber hinaus handelt es sich bei der bestehenden Arbitrierung um eine passive Arbitrierung, die erst nach einer Änderung des Fahrzeugzustands erfolgt, wie z. B. um eine koordinierende Arbitrierung der Federung und anderer Aktuationssystemen, die erst dann erfolgt, nachdem das Fahrzeug während der Fahrt auf eine unebene Fahrbahn gestoßen ist. Durch diesen Schritt kann der Fahrwerk-Domänencontroller nicht nur basierend auf den Straßeninformationen und der Fahrabsicht eine für die zukünftigen Straßenverhältnisse geeignetere Arbitrierung der Ausgabeparameter durchführen und so besser geeignete Steuerungsziele für die zukünftigen Straßenverhältnisse erhalten, sondern auch im Voraus die Arbeitszuweisung der Aktuationssysteme optimieren, wodurch die Fahrstabilität und das Handling des Fahrzeugs unter verschiedenen Straßenverhältnissen verbessert werden.

S206. Steuern des Aktuationssystems mit den Aktuationsparametern, sodass das Fahrzeug bis zu der Zielposition fährt.

Es ist zu beachten, dass dieser Schritt dem vorherigen Schritt S104 ähnelt und daher hier nicht erneut beschrieben wird.

Gemäß dem Verfahren zur Fahrwerk-Domänensteuerung eines Fahrzeugs gemäß den Ausführungsbeispielen der vorliegenden Anmeldung werden durch Bestimmen des zukünftigen Zieltrajektorienzustandsmodus, der auf die Straßeninformationen und die Fahrabsicht abgestimmt ist, die Zielsteuerfunktion, die auf den zukünftigen Zieltrajektorienzustandsmodus abgestimmt ist, und der Zielarbeitsmodus dieser Zielsteuerfunktion erhalten. Somit können basierend auf den Arbeitsparametern dieses Zielarbeitsmodus die Ausgabeparameter dieser Zielsteuerfunktion ermittelt werden. Basierend auf diesem zukünftigen Zieltrajektorienzustandsmodus wird eine Arbitrierung dieser Ausgabeparameter durchgeführt, um die Aktuationsparameter jedes Aktuationssystems im zukünftigen Zieltrajektorienzustandsmodus zu erhalten, sodass die einzelnen Aktuationssysteme diese Aktuationsparameter ausführen, wodurch das Fahrzeug bis zur Zielposition fahren kann.

Auf diese Weise kann der Fahrwerk-Domänencontroller den Straßeninformationen und der Fahrabsicht einen zukünftigen Trajektorienzustandsmodus zuweisen und basierend auf diesem zukünftigen Trajektorienzustandsmodus die Steuerfunktionen, die Arbeitsmodi der Steuerfunktionen und die Art der Arbitrierungsverarbeitung der Ausgabeparameter miteinander verknüpfen. Nachdem der auf die Straßeninformationen und die Fahrabsicht abgestimmte zukünftige Trajektorienzustandsmodus bestimmt wurde, kann der Arbeitsmodus der auf den Straßeninformationen und die Fahrabsicht abgestimmten Steuerfunktion schnell an die zukünftigen Straßenverhältnisse angepasst werden. Dadurch werden Steuerungsziele, die besser für die zukünftigen Straßenverhältnisse geeignet sind, und die den einzelnen Aktuationssystemen zuzuweisenden Aktuationsparameter erhalten, was die Ansprechgeschwindigkeit des Gesamtsystems verbessert. Gleichzeitig wird der Arbeitsmodus der Steuerfunktion basierend auf den Informationen vorausliegender Straßen und der Fahrabsicht eingestellt und gemäß den Informationen der voraus liegenden Straßen und der Fahrabsicht vorzeitig automatisch umgeschaltet. Dies stellt sicher, dass die Steuerungsziele der einzelnen Steuerfunktionen der Fahrwerk-Domänensteuerung den Anforderungen der zukünftigen Straßenverhältnisse entsprechen und die Leistung der Fahrwerk-Domänensteuerung des Fahrzeugs stets optimal bleibt. Somit werden die Probleme der passiven Rückkopplungsregelung mit unzureichend rechtzeitiger Reaktion und der Verzögerung bei Fahrwerk-Domänensteuerungsverfahren im Stand der Technik behoben und die Leistungsrobustheit des Fahrzeugs unter verschiedenen Straßenverhältnissen und die Fahrzeugleistung verbessert.

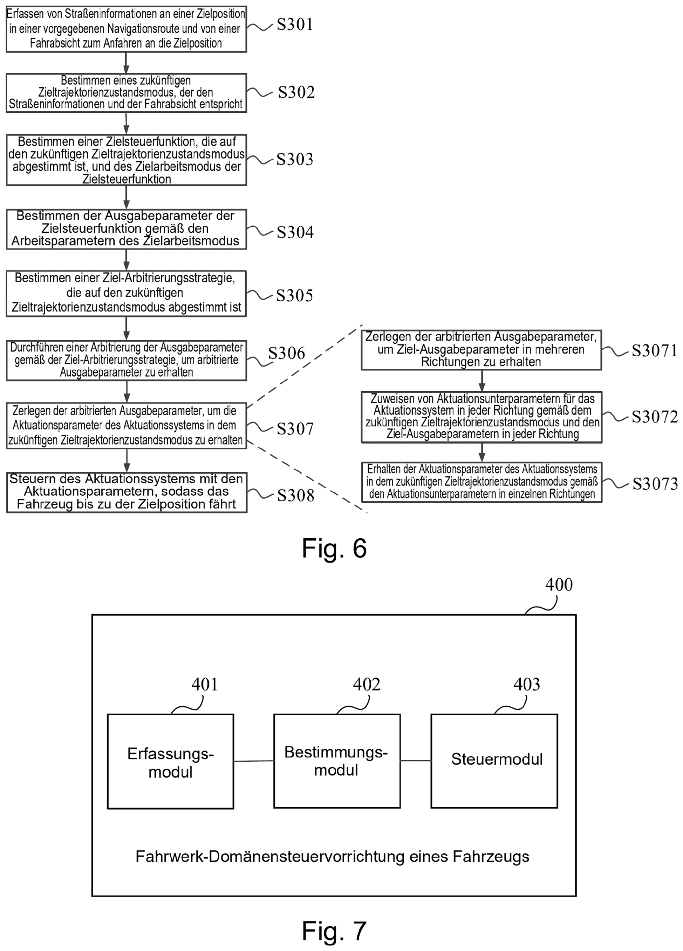

Fig. 6 zeigt ein drittes schematisches Ablaufdiagramm des Verfahrens zur Fahrwerk-Domänensteuerung eines Fahrzeugs nach der vorliegenden Anmeldung. Wie sich aus Fig. 6 ergibt, erläutert das vorliegende Ausführungsbeispiel das Verfahren zur Fahrwerk-Domänensteuerung eines Fahrzeugs auf der Grundlage des in Fig. 2 dargestellten Ausführungsbeispiels. Das Verfahren umfasst:
S301. Erfassen von Straßeninformationen an einer Zielposition in einer vorgegebenen Navigationsroute und von einer Fahrabsicht zum Anfahren an die Zielposition.

Es ist zu beachten, dass dieser Schritt dem vorherigen Schritt S101 ähnelt und daher hier nicht erneut beschrieben wird.

S302. Bestimmen eines zukünftigen Zieltrajektorienzustandsmodus, der den Straßeninformationen und der Fahrabsicht entspricht.

Es ist zu beachten, dass dieser Schritt dem vorherigen Schritt S202 ähnelt und daher hier nicht erneut beschrieben wird.

S303. Bestimmen einer Zielsteuerfunktion, die auf den zukünftigen Zieltrajektorienzustandsmodus abgestimmt ist, und des Zielarbeitsmodus der Zielsteuerfunktion.

Es ist zu beachten, dass dieser Schritt dem vorherigen Schritt S203 ähnelt und daher hier nicht erneut beschrieben wird.

S304. Bestimmen der Ausgabeparameter der Zielsteuerfunktion gemäß den Arbeitsparametern des Zielarbeitsmodus.

Es ist zu beachten, dass dieser Schritt dem vorherigen Schritt S204 ähnelt und daher hier nicht erneut beschrieben wird.

S305. Bestimmen einer Ziel-Arbitrierungsstrategie, die auf den zukünftigen Zieltrajektorienzustandsmodus abgestimmt ist.

Beispielhaft kann der Fahrwerk-Domänencontroller im Voraus eine Korrespondenz zwischen den zukünftigen Trajektorienzustandsmodi und den Arbitrierungsstrategien festlegen. Jede Arbitrierungsstrategie gibt die Art der Arbitrierungsverarbeitung für die Ausgabeparameter vor. Somit kann die Ziel-Arbitrierungsstrategie bestimmt werden, die auf den zukünftigen Zieltrajektorienzustandsmodus abgestimmt ist. Auf diese Weise wird nicht nur der Einfluss der Straßeninformationen auf das Steuerungsziel, sondern auch der Einfluss der Fahrabsicht auf das Steuerungsziel berücksichtigt. Daher kann durch die Auswahl der Arbitrierungsstrategie basierend auf dem zukünftigen Trajektorienzustandsmodus ein genaueres Steuerungsziel erhalten werden.

S306. Durchführen einer Arbitrierung der Ausgabeparameter gemäß der Ziel-Arbitrierungsstrategie, um arbitrierte Ausgabeparameter zu erhalten.

Beispielhaft, wie bereits erwähnt, gibt die Arbitrierungsstrategie die Art der Arbitrierungsverarbeitung für die Ausgabeparameter vor. Daher kann basierend auf der Ziel-Arbitrierungsstrategie eine Arbitrierung der Ausgabeparameter durchgeführt werden, um die arbitrierten Ausgabeparameter zu erhalten. Beispielsweise können Ausgabeparameter desselben Typs, die von mehreren Zielsteuerfunktionen ausgegeben werden, einer gewichteten Fusionsverarbeitung unterzogen werden, wobei der Summenwert als der arbitrierte Ausgabeparameter verwendet wird. Alternativ dazu kann für Ausgabeparameter desselben Typs einer der Ausgabeparameter als der arbitrierte Ausgabeparameter ausgewählt werden. Wenn konkret mehrere Zielsteuerfunktionen jeweils einen Wert für das Zielgiermoment ausgeben, kann gemäß der Ziel-Arbitrierungsstrategie einer dieser Werte als der einzige Ausgabewert für das endgültige Zielgiermoment ausgewählt werden, oder deren Summenwert kann als der einzige Ausgabewert für das endgültige Zielgiermoment verwendet werden.

S307. Zerlegen der arbitrierten Ausgabeparameter, um die Aktuationsparameter des Aktuationssystems in dem zukünftigen Zieltrajektorienzustandsmodus zu erhalten.

Beispielhaft können, wie bereits erwähnt, die arbitrierten Ausgabeparameter verschiedene Typen umfassen, wie z. B. Giermoment, Nickmoment, Beschleunigung usw. Im Wesentlichen lassen sie sich jedoch in Steuerungsziele in Quer-, Längs- und Vertikalrichtung unterteilen. Daher können die arbitrierten Ausgabeparameter als Quersteuerungsziel, Längssteuerungsziel und Vertikalsteuerungsziel bestimmt werden. Dabei werden in Längsrichtung Ausgabeparameter wie die Längsbeschleunigung in ein Antriebs-/Bremsmoment als Längssteuerungsziel umgewandelt. Dieses Längssteuerungsziel betrifft die Beschleunigungs-, Verzögerungs- und Konstantfahrtsteuerung des Fahrzeugs; in Querrichtung werden Ausgabeparameter wie die Querbeschleunigung und das Giermoment in ein Giermoment als Quersteuerungsziel umgewandelt. Dieses Quersteuerungsziel dient der präzisen Steuerung der Lenkung und der Fahrtrajektorie des Fahrzeugs; in vertikaler Richtung werden Ausgabeparameter wie Nickmoment, Wankmoment und Vertikalbeschleunigung in Vertikalsteuerungsziele wie Nickmoment, Wankmoment und resultierende vertikale Kraft umgewandelt. Diese vertikalen Steuerungsziele beeinflussen den Federungszustand des Fahrzeugs, die Fahrzeuglage sowie die Haftung zwischen den Reifen und Boden und können die Fahrsicherheit und den Fahrkomfort des Fahrzeugs gewährleisten. Ferner ist vorgesehen, dass bei Steuerungszielen in jeder Richtung jedem Aktuator ein Steuerungsziel in der jeweiligen Richtung zugewiesen werden kann. Dadurch erhält man für jeden Aktuator das Steuerungsziel in jeder Richtung, nämlich die Aktuationsparameter des Aktuators.

Konkret kann der Schritt die folgenden Unterschritte umfassen:
S3071. Zerlegen der arbitrierten Ausgabeparameter, um Ziel-Ausgabeparameter in mehreren Richtungen zu erhalten.

Beispielhaft kennzeichnen die oben genannten Ziel-Ausgabeparameter in mehreren Richtungen das Quersteuerungsziel, das Längssteuerungsziel und das Vertikalsteuerungsziel. Der Fahrwerk-Domänencontroller kann basierend auf einer fahrwerkdynamischen Gleichung die arbitrierten Ausgabeparameter zerlegen, um die Ziel-Ausgabeparameter in mehreren Richtungen zu erhalten.

S3072. Zuweisen von Aktuationsunterparametern für das Aktuationssystem in jeder Richtung gemäß dem zukünftigen Zieltrajektorienzustandsmodus und den Ziel-Ausgabeparametern in jeder Richtung.

Beispielhaft kennzeichnen die oben genannten Aktuationsunterparameter des Aktuationssystems in jeder Richtung das Steuerungsziel des Aktuationssystems in jeder Richtung. Der Fahrwerk-Domänencontroller kann im Voraus für den zukünftigen Trajektorienzustandsmodus und jedes Aktuationssystem die Zuweisungsgewichte in einzelnen Richtungen festlegen. Somit kann basierend auf dem zukünftigen Zieltrajektorienzustandsmodus das Zuweisungsgewicht für jedes Aktuationssystem in jeder Richtung bestimmt werden. Basierend auf diesen Zuweisungsgewichten in jeder Richtung und den Ziel-Ausgabeparametern in jeder Richtung können dann dem Aktuationssystem Aktuationsunterparameter in jeder Richtung zugewiesen werden.

In einigen denkbaren Verwirklichungsmöglichkeiten werden ein grundlegender Zuweisungskoeffizient in jeder Richtung und ein Einstellkoeffizient in jeder Richtung für das Aktuationssystem gemäß dem zukünftigen Zieltrajektorienzustandsmodus bestimmt. Die Aktuationsunterparameter des Aktuationssystems in jeder Richtung werden gemäß den Ziel-Ausgabeparametern in jeder Richtung, dem grundlegenden Zuweisungskoeffizienten des Aktuationssystems in jeder Richtung und dem Einstellkoeffizienten des Aktuationssystems in jeder Richtung bestimmt. Dabei kann der grundlegende Zuweisungskoeffizient auf der Grundlage der Konstruktionsparameter des Fahrzeugs, der Leistungsmerkmale der einzelnen Aktuationssysteme und einer Standard-Steuerungsstrategie bestimmt werden. Er kann das Ausmaß der Beteiligung des einzelnen Aktuationssystems an der Steuerung widerspiegeln. Der Einstellkoeffizient dient dazu, den grundlegenden Zuweisungskoeffizienten basierend auf den spezifischen Anforderungen der zukünftigen Straßenverhältnisse zu korrigieren. Beispielsweise kann auf nasser Fahrbahn der Einstellkoeffizient der AWD- und Bremsaktuationssysteme in Bezug auf die grundlegenden Zuweisungskoeffizienten der AWD- und Bremsaktuationssysteme eingestellt werden, um die Längsstabilität des Fahrzeugs zu gewährleisten. Dabei kann das Gewicht der Leistungsabgabe des AWD-Aktuationssystems angemessen verringert und das Ansprechgewicht des Bremsaktuationssystems erhöht werden.

Konkret am Beispiel der Querrichtung gilt: Der Fahrwerk-Domänencontroller legt im Voraus für die Querrichtung eine Abbildungsbeziehung zwischen dem zukünftigen Trajektorienzustandsmodus einerseits sowie den grundlegenden Zuweisungskoeffizienten und Einstellkoeffizienten jedes Aktuationssystems andererseits fest, wie beispielhaft in Tabelle 3 dargestellt. Es ist zu beachten, dass der Fahrwerk-Domänencontroller die Abbildungsbeziehung zwischen den zukünftigen Trajektorienzustandsmodi und den Aktuationssystemen im Voraus festlegen, somit das Aktuationssystem, das auf den zukünftigen Zieltrajektorienzustandsmodus abgestimmt ist, bestimmen und dann den grundlegenden Zuweisungskoeffizienten und den Einstellkoeffizienten des passenden Aktuationssystems bestimmen. Der Koeffizient für nicht passende Aktuationssysteme beträgt 0. Alternativ dazu können auch die grundlegenden Zuweisungskoeffizienten und Einstellkoeffizienten für jedes Aktuationssystem direkt voreingestellt werden, wobei ein Koeffizient von 0 bedeutet, dass dieses System nicht an der Steuerung unter diesem zukünftigen Trajektorienzustandsmodus teilnimmt.

**Tabelle 3: Zukünftige Trajektorienzustandsmodi sowie grundlegende Zuweisungs- und Einstellkoeffizienten der Aktuationssysteme in Querrichtung**

| zukünftiges Trajektorienzustandsmodus | Aktuationssysteme | Grundlegender Zuweisungskoeffizient | Einstellkoeffizient |
|---|---|---|---|
| Modus I | AWD | Koeffizient 1 | Koeffizient 4 |
| | Federung | Koeffizient 2 | Koeffizient 5 |
| | Hinterradlenkung | Koeffizient 3 | Koeffizient 6 |
| | Vorderradlenkung | 0 | 0 |
| | Bremse | 0 | 0 |
| Modus II | AWD | 0 | 0 |
| | Federung | Koeffizient 7 | Koeffizient 9 |
| | Hinterradlenkung | 0 | 0 |
| | Vorderradlenkung | 0 | 0 |
| | Bremse | Koeffizient 8 | Koeffizient 10 |

Zum Beispiel, wie in Tabelle 3 dargestellt, ist das Ziel-Ausgabeparameter in Querrichtung das Giermoment. Dann können die Aktuationsunterparameter jedes Aktuationssystems in Querrichtung das Giermoment des jeweiligen Aktuationssystems sein. Die Berechnungsmethode für das Giermoment jedes Aktuationssystems lautet wie folgt:
Giermoment von AWD = Giermoment × Koeffizient 1 × Koeffizient 4;
Giermoment der Hinterradlenkung = Giermoment × Koeffizient 3 × Koeffizient 6;
Giermoment der Vorderradlenkung = 0;
Giermoment der Federung = Giermoment × Koeffizient 2 × Koeffizient 5;
Giermoment der Bremse = 0;
Durch diesen Schritt werden die Steuerungsziele in jeder Richtung separat bestimmt und angepasst, was die Leistung der Fahrwerk-Domänensteuerung des Fahrzeugs in Quer-, Längs- und Vertikalrichtung verbessern und eine präzisere Steuerung ermöglichen kann.

S3073. Erhalten der Aktuationsparameter des Aktuationssystems in dem zukünftigen Zieltrajektorienzustandsmodus gemäß den Aktuationsunterparametern in einzelnen Richtungen.

Beispielhaft können durch die vorgenannten Schritte die Aktuationsunterparameter jedes Aktuationssystems in einzelnen Richtungen erhalten und somit durch deren Integration die Aktuationsparameter der Aktuationssysteme erhalten werden.

S308. Steuern des Aktuationssystems mit den Aktuationsparametern, sodass das Fahrzeug bis zu der Zielposition fährt.

Es ist zu beachten, dass dieser Schritt dem vorherigen Schritt S104 ähnelt und daher hier nicht erneut beschrieben wird.

Gemäß dem Verfahren zur Fahrwerk-Domänensteuerung eines Fahrzeugs gemäß den Ausführungsbeispielen der vorliegenden Anmeldung werden durch Bestimmen des zukünftigen Zieltrajektorienzustandsmodus, der auf die Straßeninformationen und die Fahrabsicht abgestimmt ist, die Zielsteuerfunktion, die auf den zukünftigen Zieltrajektorienzustandsmodus abgestimmt ist, der Zielarbeitsmodus der Zielsteuerfunktion und die Ziel-Arbitrierungsstrategie erhalten. Somit können basierend auf den Arbeitsparametern dieses Zielarbeitsmodus die Ausgabeparameter dieser Zielsteuerfunktion ermittelt werden. Basierend auf dieser Ziel-Arbitrierungsstrategie wird eine Arbitrierung dieser Ausgabeparameter durchgeführt. Die arbitrierten Ausgabeparameter werden in Ziel-Ausgabeparameter in mehreren Richtungen zerlegt. Basierend auf diesen Ziel-Ausgabeparametern in mehreren Richtungen werden die Aktuationsparameter jedes Aktuationssystems im zukünftigen Zieltrajektorienzustandsmodus bestimmt, sodass die einzelnen Aktuationssysteme diese Aktuationsparameter ausführen, wodurch das Fahrzeug bis zur Zielposition fahren kann.

Auf diese Weise kann der Fahrwerk-Domänencontroller den Straßeninformationen und der Fahrabsicht einen zukünftigen Trajektorienzustandsmodus zuweisen und basierend auf diesem zukünftigen Trajektorienzustandsmodus die Steuerfunktionen, die Arbeitsmodi der Steuerfunktionen sowie die Arbitrierungsstrategie für die Ausgabeparameter miteinander verknüpfen. Nachdem der auf die Straßeninformationen und die Fahrabsicht abgestimmte zukünftige Trajektorienzustandsmodus bestimmt wurde, kann der Arbeitsmodus der auf die Straßeninformationen und die Fahrabsicht abgestimmten Steuerfunktion schnell an die zukünftigen Straßenverhältnisse angepasst werden. Gleichzeitig kann basierend auf den Straßeninformationen der zu befahrenden Strecke und auf der Fahrabsicht die Auswahl und der Beitragsanteil der einzelnen FahrwerksAktuationssysteme vorab angepasst und eine effektive Arbitrierung durchgeführt werden. Dies stellt sicher, dass das Fahrzeug unter allen Fahrbedingungen stets die optimale Kombination von FahrwerksAktuationssystemen aufweist, wodurch die Gesamtfahrzeugsicherheit, die Handlingstabilität und der Fahrkomfort verbessert werden.

Fig. 7 zeigt eine schematische Strukturansicht einer Fahrwerk-Domänensteuervorrichtung eines Fahrzeugs nach der vorliegenden Anmeldung. Wie in Fig. 7 gezeigt, umfasst die Fahrwerk-Domänensteuervorrichtung 400 eines Fahrzeugs:
ein Erfassungsmodul 401 zum Erfassen von Straßeninformationen an einer Zielposition in einer vorgegebenen Navigationsroute und von einer Fahrabsicht zum Anfahren an die Zielposition;
ein Bestimmungsmodul 402 zum Bestimmen von Ausgabeparametern einer Zielsteuerfunktion in einem Fahrwerk-Domänencontroller gemäß den Straßeninformationen und der Fahrabsicht und zum Bestimmen von Aktuationsparametern eines Fahrwerk-Domänen-Aktuationssystems des Fahrzeugs gemäß den Ausgabeparametern;
ein Steuermodul 403, das dazu dient, das Aktuationssystem mit den Aktuationsparametern zu steuern, sodass das Fahrzeug bis zu der Zielposition fährt.

In einer denkbaren Verwirklichungsmöglichkeit wird das Bestimmungsmodul 402 konkret dafür verwendet:
Bestimmen eines zukünftigen Zieltrajektorienzustandsmodus, der den Straßeninformationen und der Fahrabsicht entspricht;
Bestimmen der Zielsteuerfunktion, die auf den zukünftigen Zieltrajektorienzustandsmodus abgestimmt ist, und eines Zielarbeitsmodus der Zielsteuerfunktion, wobei der Zielarbeitsmodus Arbeitsparameter aufweist; und
Bestimmen der Ausgabeparameter der Zielsteuerfunktion gemäß den Arbeitsparametern des Zielarbeitsmodus.

In einer denkbaren Verwirklichungsmöglichkeit wird das Bestimmungsmodul 402 konkret dafür verwendet:
Bestimmen der Zielsteuerfunktion, die auf den zukünftigen Zieltrajektorienzustandsmodus abgestimmt ist, und des Zielarbeitsmodus der Zielsteuerfunktion gemäß einer vorgegebenen Abbildungsbeziehung,
wobei die vorgegebene Abbildungsbeziehung eine Abbildungsbeziehung zwischen dem zukünftigen Trajektorienzustandsmodus, der Steuerfunktion und dem Arbeitsmodus der Steuerfunktion kennzeichnet.

Bei einer möglichen Ausführungsform ist vorgesehen, dass die Ausgabeparameter der Zielsteuerfunktion eines oder mehrere der Folgenden umfassen: Zielgiermoment, Zielwankmoment, Zielnickmoment, Ziel-Längsbeschleunigung, Ziel-Querbeschleunigung und Ziel-Vertikalbeschleunigung.

Bei einer möglichen Ausführungsform entsprechen die Straßeninformationen und die Fahrabsicht einem Zieltrajektorienzustandsmodus, wobei das Bestimmungsmodul 402 konkret dafür verwendet wird:
Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten.

In einer denkbaren Verwirklichungsmöglichkeit wird das Bestimmungsmodul 402 konkret dafür verwendet:
Bestimmen einer Ziel-Arbitrierungsstrategie, die auf den zukünftigen Zieltrajektorienzustandsmodus abgestimmt ist;
Durchführen einer Arbitrierung der Ausgabeparameter gemäß der Ziel-Arbitrierungsstrategie, um arbitrierte Ausgabeparameter zu erhalten; und
Zerlegen der arbitrierten Ausgabeparameter, um die Aktuationsparameter des Aktuationssystems in dem zukünftigen Zieltrajektorienzustandsmodus zu erhalten.

In einer denkbaren Verwirklichungsmöglichkeit wird das Bestimmungsmodul 402 konkret dafür verwendet:
Zerlegen der arbitrierten Ausgabeparameter, um Ziel-Ausgabeparameter in mehreren Richtungen zu erhalten;
Zuweisen von Aktuationsunterparametern für das Aktuationssystem in jeder Richtung gemäß dem zukünftigen Zieltrajektorienzustandsmodus und den Ziel-Ausgabeparametern in jeder Richtung; und
Erhalten der Aktuationsparameter des Aktuationssystems in dem zukünftigen Zieltrajektorienzustandsmodus gemäß den Aktuationsunterparametern in den einzelnen Richtungen.

In einer denkbaren Verwirklichungsmöglichkeit wird das Bestimmungsmodul 402 konkret dafür verwendet:
Bestimmen eines grundlegenden Zuweisungskoeffizienten in jeder Richtung und eines Einstellkoeffizienten in jeder Richtung für das Aktuationssystem gemäß dem zukünftigen Zieltrajektorienzustandsmodus; und
Bestimmen der Aktuationsunterparameter des Aktuationssystems in jeder Richtung gemäß den Ziel-Ausgabeparametern in jeder Richtung, dem grundlegenden Zuweisungskoeffizienten des Aktuationssystems in jeder Richtung und dem Einstellkoeffizienten des Aktuationssystems in jeder Richtung.

Bei einer möglichen Ausführungsform ist vorgesehen, dass die Straßeninformationen eines oder mehrere der Folgenden umfassen: Straßenkategorie, Stauzustand und Typ der Fahrbahnoberflächenhaftung.

Bei einer möglichen Ausführungsform ist vorgesehen, dass die Straßeninformationen den Typ der Fahrbahnoberflächenhaftung umfassen und das Erfassungsmodul 401 konkret dafür verwendet wird:
Erfassen eines anfänglichen Fahrbahnoberflächen-Haftungsfaktors an der Zielposition in der vorgegebenen Navigationsroute und der Wetterinformationen in einem vorgegebenen Zeitraum, wobei der anfängliche Fahrbahnoberflächen-Haftungsfaktor basierend auf Fahrwerksdynamikberechnung ermittelt wird und ein Zuverlässigkeitskennbit und einen Auslöseschwellwert aufweist;
Bestimmen gemäß dem Zuverlässigkeitskennbit und dem Auslöseschwellwert, ob der anfängliche Fahrbahnoberflächen-Haftungsfaktor zuverlässig ist;
Bestimmen des anfänglichen Typs der Fahrbahnoberflächenhaftung, der dem anfänglichen Fahrbahnoberflächen-Haftungsfaktor entspricht, als der Typ der Fahrbahnoberflächenhaftung, wenn er zuverlässig ist; und
Bestimmen eines nachfolgenden Typs der Fahrbahnoberflächenhaftung gemäß den Wetterinformationen und Bestimmen des nachfolgenden Typs der Fahrbahnoberflächenhaftung als der Typ der Fahrbahnoberflächenhaftung, wenn er nicht zuverlässig ist.

Die Fahrwerk-Domänensteuervorrichtung eines Fahrzeugs nach dem Ausführungsbeispiel der vorliegenden Anmeldung kann verwendet werden, um das Verfahren der oben beschriebenen Verfahrens-Ausführungsbeispiele auszuführen. Aufgrund ähnlicher Umsetzungsprinzipien und technischer Auswirkungen wird bei dem vorliegenden Ausführungsbeispiel auf eine nähere Beschreibung verzichtet.

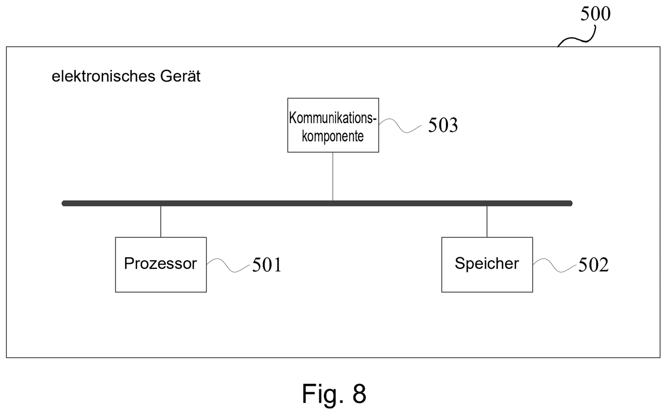

Fig. 8 zeigt eine schematische Strukturansicht eines elektronischen Geräts nach der vorliegenden Anmeldung. Wie in Fig. 8 gezeigt, umfasst das elektronische Gerät 500 nach dem vorliegenden Ausführungsbeispiel: mindestens einen Prozessor 501 und einen Speicher 502. Optional umfasst das elektronische Gerät 500 auch ferner eine Kommunikationskomponente 503. Dabei sind der Prozessor 501, der Speicher 502 und die Kommunikationskomponente 503 über einen Bus verbunden. Bei diesem elektronischen Gerät kann es sich um den zuvor erwähnten Fahrwerk-Domänencontroller handeln.

Bei der konkreten Implementierung führt der mindestens eine Prozessor 501 im Speicher 502 gespeicherte computerausführbare Anweisungen aus, sodass der mindestens eine Prozessor 501 das oben beschriebene Verfahren ausführt.

Für den konkreten Implementierungsprozess des Prozessors 501 kann Bezug auf die obigen Verfahrens-Ausführungsbeispielen genommen werden. Seine Implementierungsprinzipien und technischen Effekte sind ähnlich und werden in dem vorliegenden Ausführungsbeispiel nicht erneut beschrieben.

In dem obigen Ausführungsbeispiel ist es zu verstehen, dass der Prozessor eine zentrale Verarbeitungseinheit (Englisch: Central Processing Unit, kurz: CPU) sein kann. Alternativ kann er ein anderer universaler Prozessor, ein digitaler Signalprozessor (Englisch: Digital Signal Processor, kurz: DSP), eine anwendungsspezifische integrierte Schaltung (Englisch: Application Specific Integrated Circuit, kurz: ASIC) usw. sein. Der universale Prozessor kann ein Mikroprozessor sein oder er kann unter anderem auch ein beliebiger herkömmlicher Prozessor sein. Die Schritte des im Zusammenhang mit der vorliegenden Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Der Speicher kann einen Hochgeschwindigkeitsspeicher (Random Access Memory, RAM) und ferner einen nichtflüchtigen Speicher (Non-volatile Memory, NVM), beispielsweise mindestens einen Magnetplattenspeicher, umfassen.

Bei dem Bus kann es sich um einen Industry-Standard-Architecture (ISA)-Bus, einen Peripheral-Component-Interconnect (PCI)-Bus oder einen Extended-Industry-Standard-Architecture (EISA)-Bus usw. handeln. Die Busse können in einen Adressenbus, einen Datenbus, einen Steuerungsbus, usw. unterteilt werden. Zum Erleichtern der Darstellung sind die Busse in den Zeichnungen der vorliegenden Anmeldung nicht auf nur einen einzigen Bus oder eine einzige Art von Bussen beschränkt.

Die vorliegende Anmeldung stellt ferner ein Computerprogrammprodukt bereit, das ein Computerprogramm umfasst, welches bei dessen Ausführung von einem Prozessor das oben beschriebene Verfahren verwirklicht.

Die vorliegende Anmeldung stellt ferner ein computerlesbares Speichermedium bereit, in dem computerausführbare Anweisungen gespeichert sind. Wenn ein Prozessor die computerausführbaren Anweisungen ausführt, wird das oben beschriebene Verfahren verwirklicht.

Das oben erwähnte lesbare Speichermedium kann durch ein flüchtiges oder nichtflüchtiges Speichergerät eines beliebigen Typs, wie z. B. statisches Random-Access-Memory (SRAM), Electrically-Erasable-Programmable-Read-Only-Memory (EEPROM), Erasable-Programmable-Read-Only-Memory (EPROM), Programmable-Read-Only-Memory (PROM), Read-Only-Memory (ROM), magnetischen Speicher, Flash-Speicher, Magnetdiskette oder optische Disk, oder eine Kombination davon erzielt werden. Das lesbare Speichermedium kann ein beliebiges Medium sein, das von einem universellen oder dedizierten Computer zugegriffen werden kann.

Ein beispielhaftes lesbares Speichermedium kann mit einem Prozessor gekoppelt werden, so dass der Prozessor Informationen von dem lesbaren Speichermedium auslesen und darin Informationen schreiben kann. Selbstverständlich kann das lesbare Speichermedium auch ein Bestandteil des Prozessors sein. Der Prozessor und das lesbare Speichermedium können sich in einem anwendungsspezifischen integrierten Schaltkreis (Application Specific Integrated Circuit, kurz: ASIC) befinden. Selbstverständlich können der Prozessor und das lesbare Speichermedium auch als diskrete Komponenten in dem Gerät vorliegen.

Die Aufteilung der Einheiten stellt nur eine logische Funktionsteilung dar, wobei bei der tatsächlichen Implementierung andere Aufteilungsarten verwendbar sind, wobei beispielsweise mehrere Einheiten oder Komponenten miteinander kombinierbar oder in ein weiteres System integrierbar sind, oder wobei einige Merkmale weggelassen oder nicht durchgeführt werden können. Ferner können die angezeigten oder diskutierten gegenseitigen Kopplungen oder direkten Kopplungen oder Kommunikationsverbindungen eine indirekte Kopplung oder Kommunikationsverbindung über einige Schnittstellen, Einrichtungen oder Einheiten sein, und können elektrisch und mechanisch sein oder andere Formen annehmen.

Eine als separates Element erläuterte Einheit kann physikalisch getrennt oder physikalisch nicht getrennt sein, ein als Einheit angezeigtes Element kann eine physikalische Einheit oder keine physikalische Einheit sein, nämlich kann sie sich an einem Ort befinden oder auf mehreren Netzwerkeinheiten verteilt sein. Einige oder alle Einheiten darunter können gemäß den tatsächlichen Bedürfnissen ausgewählt werden, um den Zweck der Ausgestaltungen der vorliegenden Ausführungsbeispiele zu erzielen.

Außerdem können alle Funktionseinheiten in einzelnen Ausführungsbeispielen der vorliegenden Erfindung in eine Verarbeitungseinheit integriert sein, oder jede Funktionseinheit kann allein physisch existieren, oder zwei oder mehr als zwei der genannten Funktionseinheiten können in eine Einheit integriert sein.

Wenn die Funktion in Form einer Funktionseinheit der Software realisiert wird und als separates Produkt verkauft oder verwendet wird, kann sie in einem computerlesbaren Speichermedium gespeichert werden. Basierend auf diesem Verständnis kann der Teil der technischen Ausgestaltungen der vorliegenden Erfindung, der wesentlich ist bzw. zum Stand der Technik beiträgt, oder ein Teil dieser technischen Ausgestaltungen in Form eines Softwareprodukts ausgeführt sein, das auf einem Speichermedium gespeichert ist und einige Anweisungen enthält, um ein Computergerät, das ein Personalcomputer, ein Server oder ein Netzwerkgerät usw. sein kann, zu veranlassen, alle oder einen Teil der Schritte des Verfahrens in einzelnen Ausführungsbeispielen der vorliegenden Erfindung durchzuführen. Darüber hinaus umfasst das vorangehende Speichermedium: USB-Disk, Wechselfestplatte, Read-Only-Memory (ROM), Random-Access-Memory (RAM), Magnetplatte, optische Disk, und verschiedene Medien, die Programmcodes speichern können.

Die durchschnittlichen Fachleute auf diesem Gebiet können verstehen: Alle oder einige der Schritte für jeweilige oben beschriebene Verfahrensausführungsbeispiele können durch ein Programm über Anweisungen an relevante Hardware umgesetzt werden. Das vorangehende Programm kann in einem computerlesbaren Speichermedium gespeichert sein. Beim Ausführen des Programms werden Schritte, die die jeweiligen oben beschriebenen Verfahrensausführungsbeispiele umfassen, ausgeführt. Darüber hinaus umfasst das vorangehende Speichermedium: ROM, RAM, Diskette oder optische Disk und verschiedene andere Medien, in denen Programmcodes gespeichert werden können.

Abschließend sollte es darauf hingewiesen sein, dass für die Fachleute auf diesem Gebiet nach dem Implementieren der hierin offenbarten Erfindung unter Berücksichtigung der Beschreibung andere Ausführungsmöglichkeiten der vorliegenden Erfindung naheliegend sind. Die vorliegende Anmeldung zielt darauf ab, jegliche Varianten, Verwendungen oder adaptive Änderungen der vorliegenden Erfindung abzudecken, und solche Varianten, Verwendungen oder adaptive Änderungen folgen den allgemeinen Prinzipien der vorliegenden Erfindung und umfassen allgemein bekanntes Fachwissen oder gewöhnliches technisches Mittel, das in der vorliegenden Erfindung nicht offenbart ist, auf diesem Gebiet. Die vorliegende Erfindung ist nicht auf die oben beschriebenen und in den Figuren dargestellten genauen Strukturen beschränkt und kann auf verschiedene Weisen modifiziert bzw. verändert werden, ohne von ihrem Umfang abzuweichen. Der Umfang der vorliegenden Erfindung ist lediglich durch die beigefügten Ansprüche definiert.

## Patentansprüche

1. Verfahren zur Fahrwerk-Domänensteuerung eines Fahrzeugs, **dadurch gekennzeichnet, dass** das Verfahren umfasst:
Erfassen von Straßeninformationen an einer Zielposition in einer vorgegebenen Navigationsroute und von einer Fahrabsicht zum Anfahren an die Zielposition;
Bestimmen von Ausgabeparametern einer Zielsteuerfunktion in einem Fahrwerk-Domänencontroller gemäß den Straßeninformationen und der Fahrabsicht, und Bestimmen von Aktuationsparametern eines Fahrwerk-Domänen-Aktuationssystems des Fahrzeugs gemäß den Ausgabeparametern; und
Steuern des Aktuationssystems mit den Aktuationsparametern, sodass das Fahrzeug bis zu der Zielposition fährt.

2. Verfahren nach Anspruch 1, **dadurch gekennzeichnet, dass** das Bestimmen von Ausgabeparametern einer Zielsteuerfunktion in einem Fahrwerk-Domänencontroller gemäß den Straßeninformationen und der Fahrabsicht umfasst:
Bestimmen eines zukünftigen Zieltrajektorienzustandsmodus, der den Straßeninformationen und der Fahrabsicht entspricht;
Bestimmen der Zielsteuerfunktion, die auf den zukünftigen Zieltrajektorienzustandsmodus abgestimmt ist, und eines Zielarbeitsmodus der Zielsteuerfunktion, wobei der Zielarbeitsmodus Arbeitsparameter aufweist; und
Bestimmen der Ausgabeparameter der Zielsteuerfunktion gemäß den Arbeitsparametern des Zielarbeitsmodus.

3. Verfahren nach Anspruch 2, **dadurch gekennzeichnet, dass** das Bestimmen der Zielsteuerfunktion, die auf den zukünftigen Zieltrajektorienzustandsmodus abgestimmt ist, und eines Zielarbeitsmodus der Zielsteuerfunktion umfasst:
Bestimmen der Zielsteuerfunktion, die auf den zukünftigen Zieltrajektorienzustandsmodus abgestimmt ist, und des Zielarbeitsmodus der Zielsteuerfunktion gemäß einer vorgegebenen Abbildungsbeziehung,
wobei die vorgegebene Abbildungsbeziehung eine Abbildungsbeziehung zwischen dem zukünftigen Trajektorienzustandsmodus, der Steuerfunktion und dem Arbeitsmodus der Steuerfunktion kennzeichnet.

4. Verfahren nach Anspruch 2, **dadurch gekennzeichnet, dass** die Ausgabeparameter der Zielsteuerfunktion eines oder mehrere der Parameter umfassen: Zielgiermoment, Zielwankmoment, Zielnickmoment, Ziel-Längsbeschleunigung, Ziel-Querbeschleunigung und Ziel-Vertikalbeschleunigung.

5. Verfahren nach Anspruch 1, **dadurch gekennzeichnet, dass** die Straßeninformationen und die Fahrabsicht einem Zieltrajektorienzustandsmodus entsprechen, wobei das Bestimmen von Aktuationsparametern eines Fahrwerk-Domänen-Aktuationssystems des Fahrzeugs gemäß den Ausgabeparametern umfasst:
Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten.

6. Verfahren nach Anspruch 5, **dadurch gekennzeichnet, dass** das Durchführen einer Arbitrierung der Ausgabeparameter gemäß dem zukünftigen Zieltrajektorienzustandsmodus, um die Aktuationsparameter des Aktuationssystems in dem zukünftigen Zieltrajektorienzustandsmodus zu erhalten, umfasst:
Bestimmen einer Ziel-Arbitrierungsstrategie, die auf den zukünftigen Zieltrajektorienzustandsmodus abgestimmt ist;
Durchführen einer Arbitrierung der Ausgabeparameter gemäß der Ziel-Arbitrierungsstrategie, um arbitrierte Ausgabeparameter zu erhalten; und
Zerlegen der arbitrierten Ausgabeparameter, um die Aktuationsparameter des Aktuationssystems in dem zukünftigen Zieltrajektorienzustandsmodus zu erhalten.

7. Verfahren nach Anspruch 6, **dadurch gekennzeichnet, dass** das Zerlegen der arbitrierten Ausgabeparameter, um die Aktuationsparameter des Aktuationssystems in dem zukünftigen Zieltrajektorienzustandsmodus zu erhalten, umfasst:
Zerlegen der arbitrierten Ausgabeparameter, um Ziel-Ausgabeparameter in mehreren Richtungen zu erhalten;
Zuweisen von Aktuationsunterparametern für das Aktuationssystem in jeder Richtung gemäß dem zukünftigen Zieltrajektorienzustandsmodus und den Ziel-Ausgabeparametern in jeder Richtung; und
Erhalten der Aktuationsparameter des Aktuationssystems in dem zukünftigen Zieltrajektorienzustandsmodus gemäß den Aktuationsunterparametern in den einzelnen Richtungen.

8. Verfahren nach Anspruch 7, **dadurch gekennzeichnet, dass** das Zuweisen von Aktuationsunterparametern für das Aktuationssystem in jeder Richtung gemäß dem zukünftigen Zieltrajektorienzustandsmodus und den Ziel-Ausgabeparametern in jeder Richtung umfasst:
Bestimmen eines grundlegenden Zuweisungskoeffizienten in jeder Richtung und eines Einstellkoeffizienten in jeder Richtung für das Aktuationssystem gemäß dem zukünftigen Zieltrajektorienzustandsmodus; und
Bestimmen der Aktuationsunterparameter des Aktuationssystems in jeder Richtung gemäß den Ziel-Ausgabeparametern in jeder Richtung, dem grundlegenden Zuweisungskoeffizienten des Aktuationssystems in jeder Richtung und dem Einstellkoeffizienten des Aktuationssystems in jeder Richtung.

9. Verfahren nach einem der Ansprüche 1 bis 8, **dadurch gekennzeichnet, dass** die Straßeninformationen eines oder mehrere der folgenden Informationen umfassen: Straßenkategorie, Stauzustand und Typ der Fahrbahnoberflächenhaftung.

10. Verfahren nach einem der Ansprüche 1 bis 8, **dadurch gekennzeichnet, dass** die Straßeninformationen den Typ der Fahrbahnoberflächenhaftung umfassen und das Verfahren ferner umfasst:
Erfassen eines anfänglichen Fahrbahnoberflächen-Haftungsfaktors an der Zielposition in der vorgegebenen Navigationsroute und der Wetterinformationen in einem vorgegebenen Zeitraum, wobei der anfängliche Fahrbahnoberflächen-Haftungsfaktor basierend auf Fahrwerksdynamikberechnung ermittelt wird und ein Zuverlässigkeitskennbit und einen Auslöseschwellwert aufweist;
Bestimmen gemäß dem Zuverlässigkeitskennbit und dem Auslöseschwellwert, ob der anfängliche Fahrbahnoberflächen-Haftungsfaktor zuverlässig ist;
Bestimmen des anfänglichen Typs der Fahrbahnoberflächenhaftung, der dem anfänglichen Fahrbahnoberflächen-Haftungsfaktor entspricht, als der Typ der Fahrbahnoberflächenhaftung, wenn er zuverlässig ist; und
Bestimmen eines nachfolgenden Typs der Fahrbahnoberflächenhaftung gemäß den Wetterinformationen und Bestimmen des nachfolgenden Typs der Fahrbahnoberflächenhaftung als der Typ der Fahrbahnoberflächenhaftung, wenn er nicht zuverlässig ist.

11. Fahrwerk-Domänensteuervorrichtung eines Fahrzeugs, **dadurch gekennzeichnet, dass** die Fahrwerk-Domänensteuervorrichtung umfasst:
ein Erfassungsmodul zum Erfassen von Straßeninformationen an einer Zielposition in einer vorgegebenen Navigationsroute und von einer Fahrabsicht zum Anfahren an die Zielposition;
ein Bestimmungsmodul zum Bestimmen von Ausgabeparametern einer Zielsteuerfunktion in einem Fahrwerk-Domänencontroller gemäß den Straßeninformationen und der Fahrabsicht und zum Bestimmen von Aktuationsparametern eines Fahrwerk-Domänen-Aktuationssystems des Fahrzeugs gemäß den Ausgabeparametern; und
ein Steuermodul, das dazu dient, das Aktuationssystem mit den Aktuationsparametern zu steuern, sodass das Fahrzeug bis zu der Zielposition fährt.

12. Elektronisches Gerät, **dadurch gekennzeichnet, dass** das elektronische Gerät umfasst: einen Speicher und einen Prozessor,
wobei in dem Speicher computerausführbare Anweisungen gespeichert sind,
und wobei der Prozessor die computerausführbaren Anweisungen, die in dem Speicher gespeichert sind, ausführt, sodass der Prozessor das Verfahren nach einem der Ansprüche 1 bis 10 ausführt.

13. Computerlesbares Speichermedium, **dadurch gekennzeichnet, dass** in dem computerlesbaren Speichermedium computerausführbare Anweisungen gespeichert sind, die beim Ausführen von einem Prozessor zum Verwirklichen des Verfahrens nach einem der Ansprüche 1 bis 10 dient.
